# EUROPEAN PATENT APPLICATION

(11) **EP 4 403 952 A1**
(43) Date of publication of application: **24.07.2024**
(21) Application number: 22877867.6
(22) Date of filing: 23.09.2022
(51) Int. Cl.: G01S 7/481, G01S 17/93, H04N 13/239

(54) **CONTROL DETECTION METHOD, CONTROL APPARATUS, LASER RADAR, AND TERMINAL DEVICE**

(30) Priority: 08.10.2021 CN 202111169740
(71) Applicant: Huawei Technologies Co., Ltd., Shenzhen, Guangdong 518129 (CN)
(72) Inventor: WANG, Chao, Shenzhen, Guangdong 518129 (CN)
(74) Representative: Epping - Hermann - Fischer
(86) International application number: PCT/CN2022/121114
(87) International publication number: WO 2023/056848

(57) **Abstract**

A detection control method, a control apparatus, a LiDAR, a terminal device, and a computer-readable storage medium are provided. The method includes: controlling a light source in a first light source region to transmit first signal light at first power, and controlling a light source in a second light source region to transmit second signal light at second power; and controlling a pixel in a first pixel region corresponding to the first light source region to receive a first echo signal, where the first pixel region corresponds to a spatial position of a first object, the first echo signal includes reflected light obtained after the first signal light is reflected by the first object, and the second power is higher than the first power. The control apparatus includes at least one processor and an interface circuit, where the processor is configured to perform the method. The LiDAR includes a transmitting module, a receiving module, and a control apparatus configured to perform the method. The terminal device includes a control apparatus configured to perform the method. The computer-readable storage medium stores a computer program or instructions, where when the computer program or instructions are executed by a control apparatus, the control apparatus is enabled to perform the method. Because the spatial position of the first object corresponds to the first pixel region, an intensity of the first echo signal can be reduced by reducing the power at which the first signal light is transmitted by the light source in the first light source region corresponding to the first pixel region, and further, the first echo signal can be inhibited from entering other pixels than those in the first pixel region. This helps reduce optical interference.

## Description

### CROSS-REFERENCE TO RELATED APPLICATIONS

This application claims priority to Chinese Patent Application No. 202111169740.4, filed with the China National Intellectual Property Administration on October 8, 2021 and entitled "DETECTION CONTROL METHOD, CONTROL APPARATUS, LIDAR, AND TERMINAL DEVICE", which is incorporated herein by reference in its entirety.

### TECHNICAL FIELD

This application relates to the field of detection technologies, and in particular, to a detection control method, a control apparatus, a LiDAR, and a terminal device.

### BACKGROUND

With development of science and technology, intelligent terminals such as intelligent transportation devices, smart home devices, robots, and vehicles are gradually entering people's daily life. A detection system plays an increasingly important role on an intelligent terminal. The detection system can sense an ambient environment, recognize and track a moving object based on sensed environment information, recognize a still scene such as a lane line or a sign, and perform path planning with reference to a navigator, map data, and the like. Therefore, the detection system plays an increasingly important role on the intelligent terminal.

In an actual application scenario, when sensing the ambient environment, the detection system inevitably encounters an object with high reflectivity or special reflectivity (referred to as a retro-reflector), for example, a road sign, a warning sign, a signpost, a roadside safety post, a protective fence, a corner convex mirror, a vehicle license plate, or a highly reflective coating sticker on a vehicle body. These high-reflectivity objects or retro-reflector objects generate strong scattered light, and the strong scattered light may cause optical interference and reduce accuracy of detecting an object in a detection region by the detection system.

In summary, how to reduce optical interference caused by a high-reflectivity object or a retro-reflector object is a technical problem that needs to be urgently resolved currently.

### SUMMARY

This application provides a detection control method, a control apparatus, a LiDAR, and a terminal device to reduce optical interference in a detection system as much as possible.

According to a first aspect, this application provides a detection control method. The method includes: controlling a light source in a first light source region to transmit first signal light at first power, and controlling a light source in a second light source region to transmit second signal light at second power; and controlling a pixel in a first pixel region to receive a first echo signal, where the first pixel region corresponds to a spatial position of a first object, the first light source region corresponds to the first pixel region, the second light source region corresponds to a second pixel region, the first echo signal includes reflected light obtained after the first signal light is reflected by the first object, and the second power is higher than the first power.

Based on this solution, the first power of the light source in the first light source region corresponding to the first pixel region corresponding to the spatial position of the first object is reduced, to help reduce an intensity (or referred to as energy) of the first signal light. This can help reduce an intensity (or referred to as energy) of the first echo signal, and further help reduce the first echo signal entering other pixels than those in the first pixel region. This helps reduce interference caused by the first echo signal to the other pixels (for example, pixels in the second pixel region) than those in the first pixel region.

Further, optionally, the method further includes: controlling a pixel in the second pixel region to receive a second echo signal obtained after the second signal light is reflected by a second object. The pixel in the second pixel region is controlled to receive the second echo signal, and the second echo signal may be used in combination with the first echo signal received by the pixel in the first pixel region to implement complete detection of a full field of view of a detection region.

In a possible implementation, the method is applied to a detection system, the detection system includes a light source array and a pixel array, the light source array includes m×n light sources, the pixel array includes m×n pixels, the light sources in the light source array correspond to the pixels in the pixel array, and both m and n are integers greater than 1.

Based on the detection system, the detection region can be scanned without the need of a scanning structure.

In a possible implementation, the method may further include: controlling a light source in the light source array to transmit third signal light at third power; and controlling a pixel in the pixel array to receive a third echo signal, that is, controlling gating of the pixel in the pixel array. The third echo signal includes reflected light obtained after the third signal light is reflected by the first object and/or the second object. To be specific, the third echo signal may be reflected light obtained after the third signal light is reflected by the first object, or may be reflected light obtained after the third signal light is reflected by the second object, or may include both reflected light reflected by the first object and reflected light reflected by the second object. An intensity of the third echo signal corresponding to the pixel in the first pixel region is greater than or equal to a first preset value, and/or an intensity of the third echo signal corresponding to the pixel in the second pixel region is less than the first preset value. The light source array includes the first light source region and the second light source region, and the pixel array includes the first pixel region and the second pixel region. In other words, both the first light source region and the second light source region belong to the light source array, and both the first pixel array and the second pixel array belong to the pixel array.

The light source in the light source array is controlled to transmit the third signal light at the same third power, and pixels included in the first pixel region and/or pixels included in the second pixel region may be recognized based on a relationship between the intensity of the third echo signal and the first preset value.

In another possible implementation, the method further includes: controlling a light source in the light source array to transmit third signal light at third power; and controlling a pixel in the pixel array to receive a third echo signal. The third echo signal includes reflected light obtained after the third signal light is reflected by the first object and/or the second object, a difference between an intensity of the third echo signal corresponding to the pixel in the first pixel region and an intensity of the third echo signal corresponding to the pixel in the second pixel region is greater than or equal to a second preset value, and a first distance corresponding to the pixel in the first pixel region is the same as a first distance corresponding to the pixel in the second pixel region. The light source array includes the first light source region and the second light source region, and the pixel array includes the first pixel region and the second pixel region. In other words, both the first light source region and the second light source region belong to the light source array, and both the first pixel array and the second pixel array belong to the pixel array.

It may also be understood that after pairwise subtraction of intensities corresponding to pixels with the same first distance, a pixel corresponding to a larger intensity whose difference is greater than or equal to the second preset value is the pixel in the first pixel region.

The light source in the light source array is controlled to transmit the third signal light at the same third power, and pixels included in the first pixel region and/or pixels included in the second pixel region may be recognized based on the intensity of the third echo signal and the first distance determined based on the third echo signal.

In still another possible implementation, the method further includes: controlling a light source in the light source array to transmit third signal light at third power; determining a third pixel region based on a received third echo signal; controlling a light source in a third light source region to transmit fourth signal light at fourth power, and controlling a light source in a fourth light source region to transmit fifth signal light at fifth power, where the fifth power is higher than the fourth power; controlling the pixel array to receive a fourth echo signal and a fifth echo signal; and determining the first pixel region and the second pixel region based on the fourth echo signal and the fifth echo signal. The fourth echo signal includes reflected light obtained after the fourth signal light is reflected by the first object, the fifth echo signal includes reflected light obtained after the fifth signal light is reflected by the second object, the third echo signal includes reflected light obtained after the third signal light is reflected by the first object and/or the second object, the third light source region corresponds to the third pixel region, an intensity of the third echo signal corresponding to the third pixel region is greater than or equal to a fourth preset value, and the third pixel region includes the first pixel region and a pixel interfered with by the third echo signal that is obtained through reflection by the first object. The light source array includes the first light source region and the second light source region, and the pixel array includes the first pixel region and the second pixel region. In other words, both the first light source region and the second light source region belong to the light source array, and both the first pixel array and the second pixel array belong to the pixel array.

The light source in the light source array is controlled to transmit the third signal light at the same third power. First, the third pixel region may be determined based on the third echo signal. The third pixel region may include the pixel already interfered with by the reflected light reflected by the first object. The first pixel region corresponding to the spatial position of the first object may be accurately determined from the third pixel region by further adaptively adjusting the power of the light source in the third light source region corresponding to the third pixel region. This helps obtain complete and accurate association information (for example, association information of the first object and the second object) of the detection region in the full field of view.

The following uses column-based gating of a light source in the light source array and column-based gating of a pixel in the pixel array as an example.

In a possible implementation, the third pixel region includes row aᵢ to row aⱼ and column bi to column bⱼ of the pixel array, both ai and bi are integers greater than 1, aⱼ is an integer greater than ai, and bⱼ is an integer greater than bi.

Based on the third pixel region, the method may further include: controlling a light source in column bᵢ₋₁ of the light source array to transmit the fifth signal light at the fifth power; and controlling gating of pixels in column bᵢ₋₁ and column bi of the pixel array, where a transmitting field of view of the light source in column bᵢ₋₁ corresponds to a receiving field of view of a pixel in column bᵢ₋₁.

The pixel in column bᵢ₋₁ is a pixel in a first edge region of the third pixel region. Herein, the light source in column bᵢ₋₁ corresponding to the pixel in column bᵢ₋₁ transmits the fifth signal light at the fifth power, and the pixels in column bᵢ₋₁ and column bi are gated to jointly receive the fifth echo signal, so that subsequent gating of pixels is staggered gating. In this way, impact of interference of the echo signal reflected by the first object on echo signals from other objects (for example, the second object) in the detection region can be reduced.

Further, the method may further include: controlling gating of pixels in row ai to row aⱼ in column bᵢ₊₁ to column bⱼ of the pixel array; and controlling light sources in row ai to row aⱼ in column bi to column bⱼ₋₁ of the light source array to transmit the fourth signal light at the fourth power.

Because gating of pixel columns is staggered by one column, impact of interference of the echo signal reflected by the first object on echo signals reflected by other objects (for example, the second object) in the detection region can be reduced by using energy at an edge of a flare of the echo signal, an interference phenomenon can be improved, and effective detection can be implemented within a range of the full field of view of the detection system.

Further, the method may further include: controlling gating of other pixels than the pixels in row ai to row aⱼ in column bᵢ₊₁ to column bⱼ of the pixel array; and controlling other light sources than those in row ai to row aⱼ in column bi to column bⱼ₋₁ of the light source array to transmit the fifth signal light at the fifth power.

Further, the method may further include: stopping gating of a pixel in column bⱼ₊₁ of the pixel array; and controlling a light source in column bⱼ of the light source array to transmit sixth signal light at sixth power.

The light source in column bⱼ is controlled to transmit the sixth signal light at the sixth power, and in this case, no pixel is gated. Therefore, when pixels (for example, the pixel in column bⱼ₊₁) after the third pixel region are gated, gating of pixel columns and light source columns is no longer staggered, that is, the gated pixel columns may be aligned with the corresponding light source columns. In a possible implementation, the first pixel region includes row Aᵢ to row Aⱼ and column Bᵢ to column Bⱼ of the pixel array, both Aᵢ and Bᵢ are integers greater than 1, Aⱼ is an integer greater than Aᵢ, and Bⱼ is an integer greater than Bᵢ.

Based on the first pixel region, the method may further include: controlling a light source in column Bᵢ₋₁ of the light source array to transmit the second signal light at the second power; and controlling gating of pixels in column Bᵢ₋₁ and column Bᵢ of the pixel array, where a transmitting field of view of the light source in column Bᵢ₋₁ corresponds to a receiving field of view of a pixel in column Bᵢ₋₁.

The pixel in column Bᵢ₋₁ is a pixel in a first edge region of the first pixel region. Herein, the light source in column Bᵢ₋₁ corresponding to the pixel in column Bᵢ₋₁ transmits the second signal light at the second power, and the pixels in column Bᵢ₋₁ and column Bᵢ are gated to jointly receive the second echo signal, so that subsequent gating of pixels is staggered gating. In this way, impact of interference of the echo signal reflected by the first object on echo signals from other objects (for example, the second object) in the detection region can be reduced.

Further, the method may further include: controlling gating of pixels in row Aᵢ to row Aⱼ in column Bᵢ₊₁ to column Bⱼ of the pixel array; and controlling light sources in row Aᵢ to row Aⱼ in column Bᵢ to column Bⱼ₋₁ of the light source array to transmit the first signal light at the first power.

Because gating of pixel columns is staggered by one column, impact of interference of the echo signal reflected by the first object on echo signals reflected by other objects (for example, the second object) in the detection region can be reduced by using energy at an edge of a flare of the echo signal, an interference phenomenon can be improved, and effective detection can be implemented within a range of the full field of view of the detection system.

Further, the method may further include: controlling gating of other pixels than the pixels in row Aᵢ to row Aⱼ in column Bᵢ₊₁ to column Bⱼ of the pixel array; and controlling other light sources than those in row Aᵢ to row Aⱼ in column Bᵢ to column Bⱼ₋₁ of the light source array to transmit the second signal light at the second power.

Further, the method may further include: stopping gating of a pixel in column Bⱼ₊₁ of the pixel array; and controlling a light source in column Bⱼ of the light source array to transmit sixth signal light at sixth power.

The light source in column Bⱼ is controlled to transmit the sixth signal light at the sixth power, and in this case, no pixel is gated. Therefore, when pixels (for example, the pixel in column Bⱼ₊₁) after the first pixel region are gated, gating of pixel columns and light source columns is no longer staggered, that is, the gated pixel columns may be aligned with the corresponding light source columns.

The following uses row-based gating of a light source in the light source array and row-based gating of a pixel in the pixel array as an example.

In a possible implementation, the third pixel region includes row aᵢ to row aⱼ and column bi to column bⱼ of the pixel array, both ai and bi are integers greater than 1, aⱼ is an integer greater than ai, and bⱼ is an integer greater than bi.

Based on the third pixel region, the method may further include: controlling a light source in row aᵢ₋₁ of the light source array to transmit the fifth signal light at the fifth power; and controlling gating of pixels in row aᵢ₋₁ and row ai of the pixel array, where a transmitting field of view of the light source in row aᵢ₋₁ corresponds to a receiving field of view of a pixel in row aᵢ₋₁.

The pixel in row aᵢ₋₁ is a pixel in a first edge region of the third pixel region. Herein, a light source in column bᵢ₋₁ corresponding to the pixel in row aᵢ₋₁ transmits the fifth signal light at the fifth power, and the pixels in row aᵢ₋₁ and row ai are gated to j ointly receive the fifth echo signal, so that subsequent gating of pixels is staggered gating. In this way, impact of interference of the echo signal reflected by the first object on echo signals from other objects (for example, the second object) in the detection region can be reduced.

Further, the method may further include: controlling gating of pixels in column bi to column bⱼ in row aᵢ₊₁ to row aⱼ of the pixel array; and controlling light sources in column bi to column bⱼ in row ai to row aⱼ₋₁ of the light source array to transmit the fourth signal light at the fourth power.

Because gating of pixel columns is staggered by one row, impact of interference of the echo signal reflected by the first object on echo signals reflected by other objects (for example, the second object) in the detection region can be reduced by using energy at an edge of a flare of the echo signal, an interference phenomenon can be improved, and effective detection can be implemented within a range of the full field of view of the detection system.

Further, the method may further include: controlling gating of other pixels than the pixels in column bi to column bⱼ in row aᵢ₊₁ to row aⱼ of the pixel array; and controlling other light sources than those in column bi to column bⱼ in row ai to row aⱼ₋₁ of the light source array to transmit the fifth signal light at the fifth power.

Further, the method may further include: stopping gating of a pixel in row aⱼ₊₁ of the pixel array; and controlling a light source in row aⱼ of the light source array to transmit sixth signal light at sixth power.

The light source in column aⱼ is controlled to transmit the sixth signal light at the sixth power, and in this case, no pixel is gated. Therefore, when pixels (for example, the pixel in row aⱼ₊₁) after the third pixel region are gated, gating of pixel rows and light source rows is no longer staggered, that is, the gated pixel rows may be aligned with the corresponding light source rows.

In a possible implementation, the first pixel region includes row Aᵢ to row Aⱼ and column Bᵢ to column Bⱼ of the pixel array, both Aᵢ and Bᵢ are integers greater than 1, Aⱼ is an integer greater than Aᵢ, and Bⱼ is an integer greater than Bᵢ.

Based on the first pixel region, the method may further include: controlling a light source in row Aᵢ₋₁ of the light source array to transmit the second signal light at the second power; and controlling gating of pixels in row Aᵢ₋₁ and row Aᵢ of the pixel array, where a transmitting field of view of the light source in row Aᵢ₋₁ corresponds to a receiving field of view of a pixel in row Aᵢ₋₁.

The pixel in row Aᵢ₋₁ is a pixel in a first edge region of the first pixel region. Herein, a light source in column Bᵢ₋₁ corresponding to the pixel in row Aᵢ₋₁ transmits the second signal light at the second power, and the pixels in row Aᵢ₋₁ and row Aᵢ are gated to jointly receive the second echo signal, so that subsequent gating of pixels is staggered gating. In this way, impact of interference of the echo signal reflected by the first object on echo signals from other objects (for example, the second object) in the detection region can be reduced.

Further, the method may further include: controlling gating of pixels in column Bᵢ to column Bⱼ in row Aᵢ₊₁ to row Aⱼ of the pixel array; and controlling light sources in column Bᵢ to column Bⱼ in row Aᵢ to row Aⱼ₋₁ of the light source array to transmit the first signal light at the first power.

Because gating of pixel columns is staggered by one row, impact of interference of the echo signal reflected by the first object on echo signals reflected by other objects (for example, the second object) in the detection region can be reduced by using energy at an edge of a flare of the echo signal, an interference phenomenon can be improved, and effective detection can be implemented within a range of the full field of view of the detection system.

Further, the method may further include: controlling gating of other pixels than the pixels in column Bᵢ to column Bⱼ in row Aᵢ₊₁ to row Aⱼ of the pixel array; and controlling other light sources than those in column Bᵢ to column Bⱼ in row Aᵢ to row Aⱼ₋₁ of the light source array to transmit the second signal light at the second power.

Further, the method may further include: stopping gating of a pixel in row Aⱼ₊₁ of the pixel array; and controlling a light source in row Aⱼ of the light source array to transmit sixth signal light at sixth power.

The light source in column Aⱼ is controlled to transmit the sixth signal light at the sixth power, and in this case, no pixel is gated. Therefore, when pixels (for example, the pixel in row Aⱼ₊₁) after the first pixel region are gated, gating of pixel rows and light source rows is no longer staggered, that is, the gated pixel rows may be aligned with the corresponding light source rows.

According to a second aspect, this application provides a control apparatus. The control apparatus is configured to implement the method according to any one of the first aspect or the implementations of the first aspect, and configured to implement the steps in the foregoing method. A function may be implemented by hardware, or may be implemented by corresponding software executed by hardware. The hardware or software includes one or more modules corresponding to the foregoing function.

In a possible implementation, the control apparatus may be an independent control apparatus, or may be a module in the control apparatus, for example, a chip, a system-on-a-chip, or a circuit. For beneficial effects, refer to the descriptions in the first aspect. Details are not described herein again. The control apparatus may include an interface circuit and at least one processor. The processor may be configured to support the control apparatus in performing the method according to any one of the first aspect or the implementations of the first aspect. The interface circuit is configured to support the control apparatus in communication between the control apparatus and another apparatus, or the like. The interface circuit may be an independent receiver, an independent transmitter, an input/output port integrating a transceiver function, or the like. Optionally, the control apparatus may further include a memory. The memory may be coupled to the processor. The memory stores program instructions and data that are necessary for the control apparatus. According to a third aspect, this application provides a control apparatus. The control apparatus is configured to implement the method according to any one of the first aspect or the implementations of the first aspect, and includes corresponding functional modules respectively configured to implement the steps in the foregoing method. A function may be implemented by hardware, or may be implemented by corresponding software executed by hardware. The hardware or software includes one or more modules corresponding to the foregoing function.

In a possible implementation, the control apparatus may include a processing module and a transceiver module. The modules may perform the method according to any one of the first aspect or the implementations of the first aspect. For details, refer to detailed descriptions in the method example. Details are not described herein again.

According to a fourth aspect, this application provides a chip. The chip includes at least one processor and an interface circuit. Further, optionally, the chip may further include a memory. The processor is configured to execute a computer program or instructions stored in the memory, so that the chip performs the method according to any one of the first aspect or the possible implementations of the first aspect.

According to a fifth aspect, this application provides a terminal device. The terminal device includes a control apparatus configured to perform the method according to any one of the first aspect or the possible implementations of the first aspect.

According to a sixth aspect, this application provides a LiDAR. The LiDAR includes a transmitting module, a receiving module, and a control apparatus configured to perform the method according to any one of the first aspects or the possible implementations of the first aspect. In the LiDAR, the transmitting module is configured to transmit first signal light at first power, and transmit second signal light at second power. The receiving module is configured to receive a first echo signal from a detection region, where the first echo signal includes reflected light obtained after the first signal light is reflected by a first object.

According to a seventh aspect, this application provides a terminal device. The terminal device includes a LiDAR configured to perform any one of the sixth aspect or the possible implementations of the sixth aspect.

According to an eighth aspect, this application provides a computer-readable storage medium. The computer-readable storage medium stores a computer program or instructions. When the computer program or instructions are executed by a control apparatus, the control apparatus is enabled to perform the method according to any one of the first aspect or the possible implementations of the first aspect.

According to a ninth aspect, this application provides a computer program product. The computer program product includes a computer program or instructions. When the computer program or instructions are executed by a control apparatus, the control apparatus is enabled to perform the method according to any one of the first aspect or the possible implementations of the first aspect. For technical effects that can be achieved in any one of the second aspect to the ninth aspect, refer to descriptions of beneficial effects in the first aspect. Details are not described herein again.

### BRIEF DESCRIPTION OF DRAWINGS

FIG. 1a is a schematic diagram of a reflection principle of a Lambertian reflector according to this application;
FIG. 1b is a schematic diagram of peak power within a single pulse time according to this application;
FIG. 1c is a schematic diagram of an FSI principle according to this application;
FIG. 1d is a schematic diagram of a BSI principle according to this application;
FIG. 2a is a schematic diagram of a ranging principle of a d-TOF technology according to this application;
FIG. 2b is a schematic diagram of a structure of a detection module based on a d-TOF technology according to this application;
FIG. 3 is a schematic diagram of an architecture of a detection system according to this application;
FIG. 4a is a schematic diagram of a gating manner of a light source in a light source array according to this application;
FIG. 4b is a schematic diagram of another gating manner of a light source in a light source array according to this application;
FIG. 4c is a schematic diagram of another gating manner of a light source in a light source array according to this application;
FIG. 4d is a schematic diagram of another gating manner of a light source in a light source array according to this application;
FIG. 4e is a schematic diagram of another gating manner of a light source in a light source array according to this application;
FIG. 5a is a schematic diagram of energy distribution of a flare of signal light in angular space according to this application;
FIG. 5b is another schematic diagram of energy distribution of a flare of signal light in angular space according to this application;
FIG. 6 is a schematic diagram of a structure of a pixel according to this application;
FIG. 7a is a schematic diagram of a gating manner of a light source in a pixel array according to this application;
FIG. 7b is a schematic diagram of another gating manner of a light source in a pixel array according to this application;
FIG. 7c is a schematic diagram of another gating manner of a light source in a pixel array according to this application;
FIG. 7d is a schematic diagram of another gating manner of a light source in a pixel array according to this application;
FIG. 7e is a schematic diagram of another gating manner of a light source in a pixel array according to this application;
FIG. 8 is a schematic diagram of a structure of an optical lens according to this application;
FIG. 9 is a schematic diagram of a structure of another optical lens according to this application;
FIG. 10a shows a possible application scenario according to this application;
FIG. 10b shows another possible application scenario according to this application;
FIG. 11 is a schematic flowchart of a detection control method according to this application;
FIG. 12 is a schematic flowchart of a method for determining a first pixel region according to this application;
FIG. 13 is a schematic flowchart of another method for determining a first pixel region according to this application;
FIG. 14 is a schematic flowchart of another method for determining a first pixel region according to this application;
FIG. 15 is a schematic flowchart of a method for determining a first pixel region based on a third pixel region according to this application;
FIG. 16 is a schematic flowchart of another method for determining a first pixel region based on a third pixel region according to this application;
FIG. 17 is a schematic flowchart of a method for obtaining association information in a detection region according to this application;
FIG. 18 is a schematic diagram of a structure of a control apparatus according to this application;
FIG. 19 is a schematic diagram of a structure of a control apparatus according to this application; and
FIG. 20 is a schematic diagram of an architecture of a LiDAR according to this application.

### DESCRIPTION OF EMBODIMENTS

The following describes embodiments of this application with reference to accompanying drawings.

The following explains some terms in this application. It should be noted that the explanations are intended to facilitate understanding by a person skilled in the art, but do not constitute a limitation on the protection scope claimed in this application.

### 1. Lambertian reflector

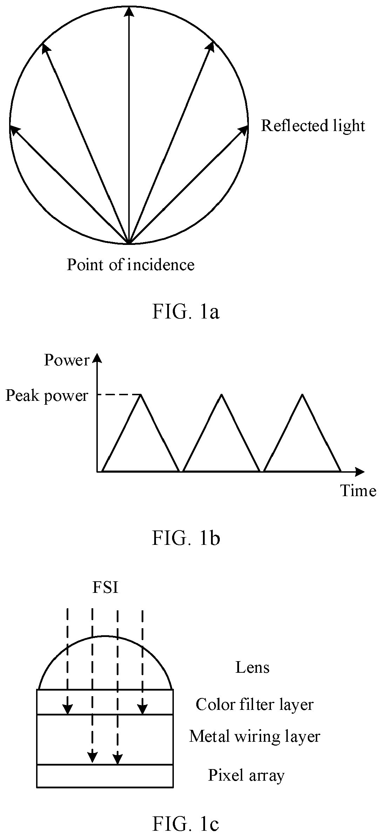

A Lambertian reflector is an object that can uniformly reflect incident light in all directions. With reference to FIG. 1a, incident light emitted to the Lambertian reflector is reflected in all directions in entire space in an isotropic manner by using a point of incidence as a center. It may also be understood that the Lambertian reflector uniformly reflects received signal light in all directions, that is, the echo signal is uniformly distributed in all directions.

### 2. Optical interference

Optical interference means that stray light interferes with a wanted signal (for example, an echo signal). Light that interferes with a normal signal may be collectively referred to as stray light. Optical interference is a common phenomenon in the field of detection. In this application, a meaning of optical interference is as follows: An echo signal obtained after a high-reflectivity object, a retro-reflector object, or the like (collectively referred to as a first object) reflects received signal light has high energy, and this echo signal should be emitted into a pixel region A. However, because energy of the echo signal is high, the high-energy echo signal may be emitted into the pixel region A and a pixel region B. For the pixel region B, this part of the echo signal is stray light, and this part of the echo signal causes optical interference to an echo signal that should be received in the pixel region B.

### 3. Peak power

When signal light transmitted by a light source is a pulse wave, maximum transmit power within a single pulse time is referred to as peak power. Refer to FIG. 1b.

### 4. Flare

A flare usually means spatial energy distribution formed by a beam on a cross section, for example, a flare formed on a cross section of an object in a detection region by signal light emitted to the detection region, or for another example, a flare formed on a photosensitive surface by an echo signal emitted to a detector. The spatial energy distribution of the flare may be in a form that is low at two ends and high in the middle. For example, the spatial energy distribution may be in a form of normal distribution (Normal distribution) or a form similar to normal distribution (Normal distribution).

A shape of the flare may be a rectangle, an ellipse, a circle, or any other possible regular or irregular shape. It should be noted that a person skilled in the art can know that, in essence, the flare is energy distribution with different intensities on the whole. In a core region, energy density is high, and the shape of the flare is obvious. However, an edge part gradually extends outward, energy density in the edge part is low, the shape of the edge part is unclear, an energy intensity gradually decreases, and recognition of a flare part near the edge is relatively low. Therefore, a flare in a specific shape in this application may be understood as a flare that is formed by a part with high energy and high energy density and whose boundary can be easily recognized. The flare is not an entirety of a flare in a technical sense.

It should be understood that maximum energy density 1/e² is usually used to define the boundary of the flare.

### 5. Angular resolution

An angular resolution, which may also be referred to as a scanning resolution, is a minimum angle between adjacent light beams emitted to the detection region. If the angular resolution is lower, more flares are emitted to the detection region, that is, more points of an object in the detection region can be detected, and definition of the detection is higher. The angular resolution includes a vertical angular resolution and a horizontal angular resolution.

### 6. Back side illumination (back side illumination, BSI)

BSI means that light is emitted into a pixel array from a back side. Refer to FIG. 1c. The light is focused on a color filter layer by a microlens (microlens) with an anti-reflection coating, divided into three primary color components by the color filter layer, and then guided into a pixel array. The back side corresponds to a front end of line (front end of line, FEOL) process of a semiconductor manufacturing process.

### 7. Front side illumination (front side illumination, FSI)

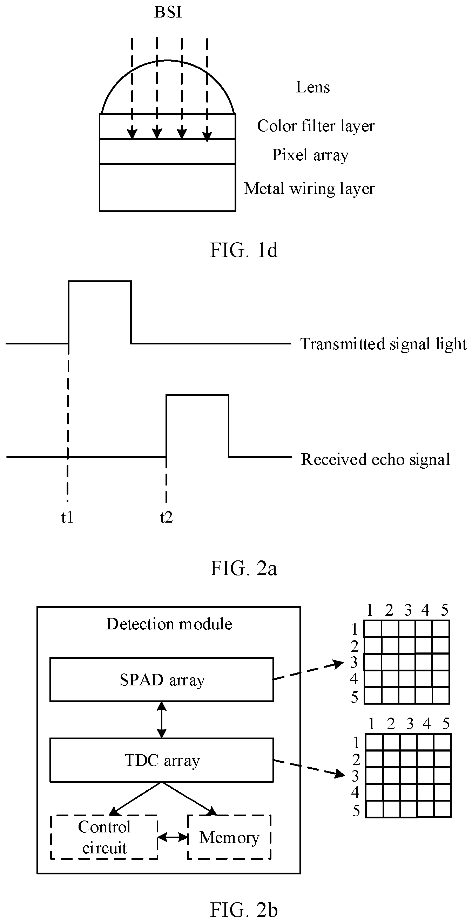

FSI means that light is emitted into a pixel array from a front side. Refer to FIG. 1d. The light is focused on a color filter layer by a microlens (microlens) with an anti-reflection coating, is divided into three primary color components by the color filter layer, and passes through a metal wiring layer, so that parallel light is guided into a pixel array. The front side corresponds to a back end of line (back end of line, BEOL) process of the semiconductor manufacturing process.

### 8. Gated pixel and gated light source

In a pixel array, a row address may be a horizontal coordinate, and a column address may be a vertical coordinate. In this application, an example in which a row of the pixel array corresponds to a horizontal direction and a column of the pixel array corresponds to a vertical direction is used for description. Data in a specified position in a memory may be read by using a row/column gating signal, and a pixel corresponding to the read specified position is a gated pixel. It should be understood that a pixel in the pixel array may store a detected signal in corresponding memory. For example, a pixel may be enabled by using a bias voltage, so that the pixel is in an active (active) state and can respond to an echo signal incident to a surface of the pixel.

In a light source array, a row address may be a horizontal coordinate, and a column address may be a vertical coordinate. In this application, an example in which a row of the pixel array corresponds to a horizontal direction and a column of the pixel array corresponds to a vertical direction is used for description. Gating of a light source means turning on (or switching on) the light source, and controlling the light source to transmit signal light at corresponding power.

### 9. Region of interest (region of interest, ROI)

A region of interest is a region in which a required pixel is marked out from the pixel array by using a box, a circle, an ellipse, an irregular polygon, or the like.

### 10. First object

Energy (or intensity) of a first echo signal obtained after the first object reflects received signal light is high. Factors that affect energy of an echo signal include but are not limited to a distance between an object and a detection system, distribution of the echo signal reflected by the object (for example, the object centrally reflects received signal light in a direction, that is, the echo signal is uniformly distributed in all directions), reflectivity of the object, and the like.

For example, the first object may be an object that is close to the detection system; or the first object is a high-reflectivity object; or the first object is an object that centrally reflects an echo signal along a direction of the detection system; or the first object is a high-reflectivity object that is close to the detection system; or the first object is an object that is close to the detection system and centrally reflects an echo signal along a direction of the detection system; or the first object is a high-reflectivity object that centrally reflects an echo signal along a direction of the detection system; or the first object is a high-reflectivity object that is close to the detection system and centrally reflects an echo signal along a direction of the detection system. The high-reflectivity object includes but is not limited to a road sign, a warning sign, a signpost, a roadside safety post, a protective fence, a corner convex mirror, a vehicle license plate, a highly reflective coating sticker on a vehicle body, and the like.

### 11. One frame of image

In this application, a meaning of one frame of image is as follows: The light source array completes scanning once, the corresponding pixel array reads all data, and an image formed based on all the read data is one frame of image.

The foregoing describes some terms in this application. The following describes technical features in this application. It should be noted that the explanations are intended to facilitate understanding by a person skilled in the art, but do not constitute a limitation on the protection scope claimed in this application.

FIG. 2a is a schematic diagram of a ranging principle of a direct time of flight (direct time of flight, d-TOF) technology according to this application. The d-TOF technology is intended to directly measure a difference (that is, t2+t1) between a transmit time t1 at which signal light is transmitted and a receive time t2 at which an echo signal is received, where the echo signal is reflected light obtained after an object in a detection region reflects the signal light; and then calculate distance information of the object according to d=C×(t2+t1)/2, where d represents a distance from the object, and C represents a speed of light.

It should be noted that the signal light is usually a pulse laser. Due to a limitation of laser safety and a limitation of power consumption of a detection system, the transmitted signal light has limited energy, but needs to cover a complete detection region. Therefore, when an echo signal obtained after the signal light is reflected by the object is returned to a receiver, an energy loss is severe. In addition, ambient light, as noise, interferes with echo signal detection and restoration by a detector. Therefore, the d-ToF technology usually requires a detector with high sensitivity to detect an echo signal. A detector applicable to the d-ToF technology is, for example, a single-photon avalanche diode (single-photon avalanche diode, SPAD) or a digital silicon photomultiplier (silicon photomultiplier, SiPM). The SPAD is used as an example. The SPAD has sensitivity to detect a single photon, and the SPAD in a working state is a diode with a high reverse bias voltage. The reverse bias voltage forms a strong electric field inside a device. When a photon is absorbed by the SPAD and converted into a free electron, the free electron is accelerated by the internal electric field to obtain enough energy, so that a free electron hole pair is generated when the free electron impacts another atom. This newly generated carrier continues to be accelerated by the electric field, and more carriers are generated by impact. This avalanche effect of geometric magnification enables the SPAD to have an almost infinite gain and output a large current pulse to detect a single photon.

FIG. 2b is a schematic diagram of a structure of a detection module based on the d-TOF technology according to this application. The detection module may include a SPAD array and a time to digital converter (time to digital convert, TDC) array. In this example, it is assumed that the SPAD array is a 5 × 5 array and that the TDC array is also a 5 × 5 array, where one TDC corresponds to one SPAD. The TDC performs time synchronization with a transmit end. After detecting a moment at which the transmit end starts to transmit signal light, a TDC starts timing. After one of at least one SPAD corresponding to the TDC that starts timing receives a photon of an echo signal, the TDC stops timing. After N times of transmission and reception, the TDC can record n (n≤N) times of the time of flight of light, and generate a distribution histogram of the time of flight. A value of the time of flight that occurs most frequently is calculated as a time t of flight of an object. Distance information of the object may be determined based on d=C×t/2.

Further, optionally, the detection module may further include a memory and/or a control circuit. The control circuit may store, in the memory, the time of flight of the signal light detected by using the SPAD/TDC.

As described in the background, when a first object exists in a detection region, an echo signal reflected by the first object may cause optical interference to pixels around a pixel that should receive the echo signal, in a pixel array in a detection system, and consequently, accuracy of detection by the detection system is reduced.

In view of the foregoing problem, this application provides a detection control method. The detection control method can reduce optical interference in a detection system as much as possible, thereby improving accuracy of detection by the detection system.

The following describes a possible architecture of a detection system to which this application is applicable. The detection system may include a light source array and a pixel array. The light source array may include m×n light sources, the pixel array may include m×n pixels, the m×n light sources correspond to the m×n pixels, and both m and n are integers greater than 1. It should be understood that the m×n light sources may be all or some light sources in the light source array, and/or that the m×n pixels may be all or some pixels in the pixel array. It may also be understood that the light source array may form a regular pattern, or form an irregular pattern. This is not limited in this application. The pixel array may also form a regular pattern, or form an irregular pattern. This is not limited in this application.

Further, optionally, a fixed optical mapping relationship is usually used between the light source array and the pixel array. Specifically, the detection system may further include a transmitting optical system and a receiving optical system. A gated light source in the light source array is configured to transmit signal light. The transmitting optical system is configured to propagate the signal light from the light source array to a detection region. Specifically, the transmitting optical system may collimate and/or uniformize and/or shape the signal light from the light source array and/or modulate energy distribution of the signal light in angular space or the like. The receiving optical system is configured to propagate an echo signal from the detection region to the pixel array, where the echo signal is reflected light obtained after the signal light is reflected by an object in the detection region. A gated pixel in the pixel array performs optical-to-electrical conversion on the received echo signal to obtain an electrical signal used to determine association information of the object. The association information of the object includes but is not limited to distance information of the object, an azimuth of the object, a speed of the object, and/or greyscale information of the object, or the like.

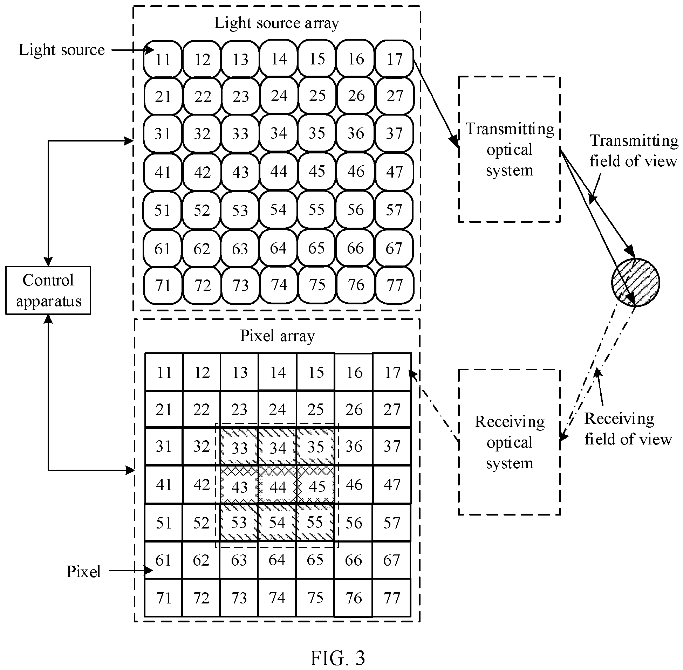

FIG. 3 is a schematic diagram of an architecture of a detection system to which this application may be applied. A light source array including 7×7 light sources is used as an example. A pixel array including 7×7 pixels is used as an example. The 7×7 light sources correspond to the 7×7 pixels. In other words, light source 11 corresponds to pixel 11, light source 12 corresponds to pixel 12, and by analogy, light source 66 corresponds to pixel 66. It may also be understood that an echo signal obtained after signal light transmitted by light source 11 is reflected by an object in a detection region may be received by pixel 11, and an echo signal obtained after signal light transmitted by light source 12 is reflected by an object in the detection region may be received by pixel 12, and by analogy, an echo signal obtained after signal light transmitted by light source 66 is reflected by an object in the detection region may be received by pixel 66. Further, a first column of light sources corresponds to a first column of pixels, a second column of light sources corresponds to a second column of pixels, and by analogy, a seventh column of light sources corresponds to a seventh column of pixels. Similarly, a first row of light sources corresponds to a first row of pixels, a second row of light sources corresponds to a second row of pixels, and by analogy, a seventh row of light sources corresponds to a seventh row of pixels.

It should be noted that signal light transmitted by a light source may be projected to form a flare in the detection region. Therefore, based on the light source array shown in FIG. 3, corresponding 7×7 flares may be formed in the detection region. In addition, a transmitting field of view of each light source and energy distribution of a flare of signal light in angular space may be designed in advance.

The following separately describes structures in the foregoing detection system, to provide an example of a specific implementation solution.

### 1. Light source array

In a possible implementation, a light source in the light source array may be, for example, a vertical cavity surface emitting laser (vertical cavity surface emitting laser, VCSEL), an edge emitting laser (edge emitting laser, EEL), a diode pumped solid state laser (diode pumped solid state laser, DPSS), or a fiber laser.

Further, optionally, independent addressing may be implemented for the light source array. The independent addressing means that a light source in the light source array may be independently gated (or turned on, or switched on, or powered on), and the gated light source may be used to transmit signal light. For example, addressing may be implemented in an electrical scanning manner. Specifically, a drive current may be input to a light source that needs to be gated.

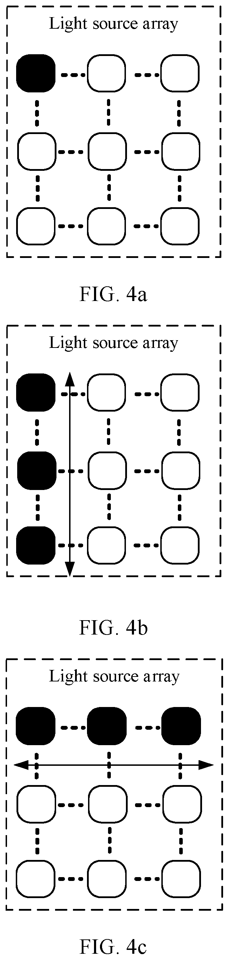

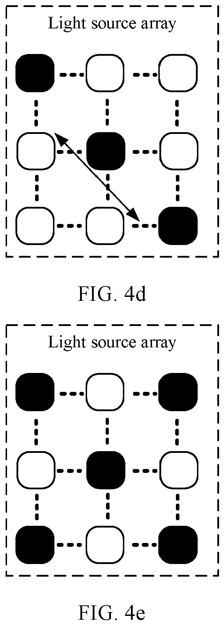

In a possible implementation, an addressing manner of the light source array includes but is not limited to gating light sources point by point, gating light sources column by column, gating light sources row by row, gating light sources based on a region of interest, or the like. It should be noted that the addressing manner of the light source array is related to a physical connection relationship between the light sources. For example, if a physical connection mode of the light sources in the light source array is parallel connection, the light sources may be gated point by point (referring to FIG. 4a), or the light sources may be gated column by column (referring to FIG. 4b), or the light sources may be gated row by row (referring to FIG. 4c), or the light sources may be gated in an inclined (for example, in a diagonal direction) manner (referring to FIG. 4d), or the light sources may be gated based on the region of interest (referring to FIG. 4e). The region of interest may be gating the light sources based on a specific pattern, a specific order, or the like. For another example, with reference to FIG. 4b, if light sources in a same column in the light source array are connected in series, and different columns are connected in parallel, the light sources may be gated column by column. For another example, with reference to FIG. 4c, if light sources in a same row in the light source array are connected in series, and different rows are connected in parallel, the light sources may be gated row by row. For another example, with reference to FIG. 4d, if light sources on each inclined diagonal in the light source array are connected in series, and light sources on different inclined diagonals are connected in parallel, the light sources may be gated based on the inclined diagonals. It should be understood that when the light sources are gated point by point, a time interval for gating adj acent light sources may be short. Therefore, a problem of optical interference may also exist when the light sources are gated point by point. To reduce optical interference as much as possible, when the light sources are gated point by point, the time for gating the adjacent light sources may be set to a larger value.

It should be noted that point-by-point gating of the light source array may implement point-based scanning of the detection region, and column-by-column gating of the light source array may implement column-based scanning of the detection region, and row-by-row gating of the light source array may implement column-based scanning of the detection region, and gating of the light sources based on the region of interest may implement scanning of a specific field of view of the detection region. After all the light sources in the light source array are gated, scanning of the full field of view of the detection region may be implemented. It may also be understood that a full field of view of the detection system may be obtained by concatenating the transmitting field of view of each light source in the light source array. The transmitting field of view of the light source may be designed in advance based on an application scenario of the detection system. For example, the detection system is mainly applied to a long-distance detection scenario, and the transmitting field of view of the light source may be greater than 0.2°; the detection system is mainly applied to a medium-distance detection scenario, and the transmitting field of view of the light source may be 0.1° to 0.25°; or the detection system is mainly applied to a short-distance detection scenario, and the transmitting field of view of the light source may be less than 0.15°. For another example, the transmitting field of view of the light source may be further designed based on an angular resolution required by an application scenario of the detection system, for example, may be designed as 0.01° to 2°.

It should be understood that energy distribution of a flare of signal light emitted to the detection region, in angular space (that is, energy distribution of signal light transmitted by a light source, on a surface of any object in space) usually cannot be completely concentrated within a specific angle range without "leakage". In a possible implementation, a specific form of energy distribution of the flare of the signal light emitted to the detection region, in the angular space may be designed based on an actual requirement or energy link simulation. It may also be understood that the specific form of energy distribution of the flare of the signal light in the angular space may be designed based on energy link simulation or an actual requirement. In a possible implementation, energy distribution of the flare of the signal light in the angular space may be determined by a feature of the light source. If coherence of the light source is higher, energy distribution of the flare of the signal light transmitted by the light source, in the angular space is closer to a Gaussian beam. In another possible implementation, energy distribution of the flare of the signal light in the angular space may be further controlled by a transmitting optical system. For example, energy distribution of the signal light transmitted by the light source, in the angular space is a Gaussian beam or a Gaussian-like beam, but a divergence angle is large. Further spatial modulation may be performed by the transmitting optical system to adjust energy distribution of the flare in the angular space. For example, the transmitting optical system may adjust the divergence angle to a divergence angle that meets a requirement. For the adjustment, by the transmitting optical system, on the signal light transmitted by the light source, refer to the following related descriptions. Details are not described herein.

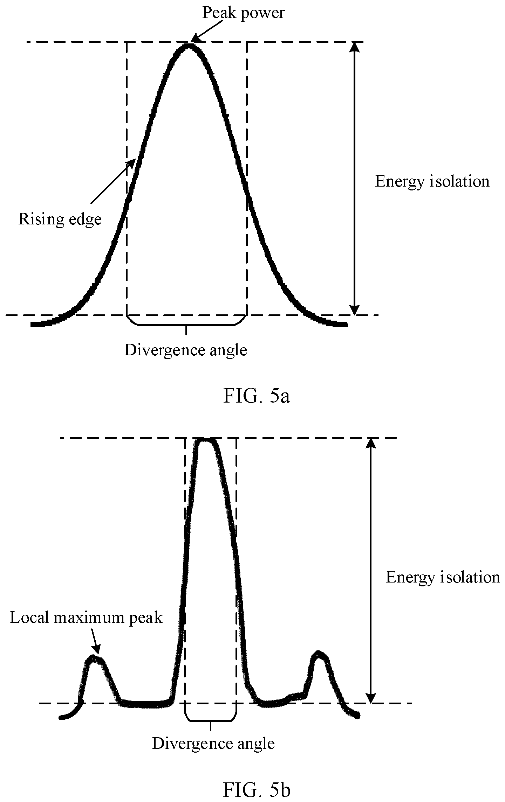

FIG. 5a is a schematic diagram of energy distribution of a flare of signal light in angular space according to this application. Energy distribution of the flare is approximately a Gaussian beam. Most energy of the flare in the Gaussian beam is concentrated in a divergence angle (that is, in a transmitting field of view). The divergence angle means a horizontal angular resolution or a vertical angular resolution of signal light transmitted by a light source, and may also be referred to as a transmitting field of view of single signal light. For example, the divergence angle may be within a range of 0.01° to 2°. It should be understood that energy attenuation of the flare in the Gaussian beam may extend to infinity. As the energy attenuation of the flare extends to a direction of infinity, the energy of the flare becomes increasingly weak. After the energy attenuation of the flare extends to an angle, the energy of the flare may even be ignored.

FIG. 5b is another schematic diagram of energy distribution of a flare of signal light in angular space according to this application. Most energy of the flare in the Gaussian beam is concentrated in the divergence angle, and some energy is designed outside the divergence angle. It may also be understood that energy distribution of the flare of the signal light in the angular space may be made high in the center through modulation (that is, most energy is concentrated in the divergence angle according to the design), and a local maximum peak exists outside the divergence angle. It should be understood that, based on the energy distribution of the flare, a longest detection distance of the detection system may be affected to some extent. To ensure that performance of the detection system apparatus is not affected, total energy of the signal light transmitted by the light source needs to be increased.

In a possible implementation, energy concentration of the flare may be represented by energy isolation, in units of decibels (dB). The energy isolation is a ratio of peak energy in the divergence angle to local maximum peak energy outside the divergence angle, or a ratio of peak energy in the divergence angle to average energy outside the divergence angle. It may also be understood that if energy isolation is greater, energy outside the divergence angle is weaker.

It should be noted that the center of the Gaussian beam or Gaussian-like beam of energy distribution of the signal light in the angular space is located in the transmitting field of view of the light source. Usually, when the detection system is applied to a long-distance detection scenario and a medium-distance detection scenario, energy distribution of the flare of the signal light in the angular space may be designed in a form shown in FIG. 5a. When the detection system is applied to a short-distance detection scenario, energy distribution of the flare in the angular space may be designed in a form shown in FIG. 5b.

In a possible implementation, an appropriate rising edge rate may be designed, so that a signal-to-noise ratio of the detection system can be increased when ambient noise is fixed. It should be understood that if a rising edge is steeper (that is, the rising edge rate is higher), the signal-to-noise ratio of the detection system is lower. In addition, a detection capability (for example, a detection distance) of the detection system is related to peak power. If the peak power is higher, the detection system can perform detection over a longer distance.

### 2. Pixel array

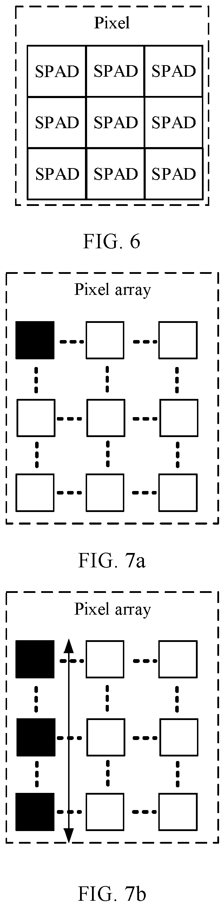

In a possible implementation, a pixel in the pixel array may include one or more photosensitive units (cell), and the photosensitive unit may be, for example, a SPAD or a SiPM. The photosensitive unit is a minimum unit in the pixel array. As an example, FIG. 6 shows one pixel including 3×3 SPADs. It may also be understood that binning is performed on 3×3 SPADs to form one pixel, that is, signals output by the 3×3 SPADs are superimposed and read in a manner of one pixel. It should be noted that the pixel may alternatively be binning of photosensitive units in a row direction or a column direction.

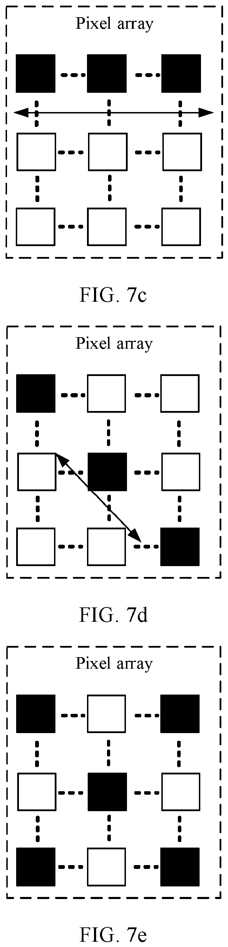

In a possible implementation, a manner of gating pixels in the pixel array includes but is not limited to point-by-point gating (referring to FIG. 7a), column-by-column gating (referring to FIG. 7b), row-by-row gating (referring to FIG. 7c), gating in an inclined manner (referring to FIG. 7d), or ROI-based gating (referring to FIG. 7e), where a region of interest may be gating the pixels based on a specific pattern, a specific order, or the like.

It should be noted that a manner of gating the pixels in the pixel array needs to be consistent with a manner of gating the light sources in the light source array. For example, the light sources in the light source array are gated row by row, and the pixels in the pixel array are also gated row by row. In other words, the light source array uses the gating manner in FIG. 4c, and the pixel array uses the gating manner in FIG. 7c. Further, gating may be performed in an order from the first row to the last row, or may be performed in an order from the last row to the first row, or may be performed in an order from a middle row to an edge row. An order of row-based gating is not limited in this application. For another example, the light sources in the light source array are gated column by column, and the pixels in the pixel array are also gated column by column. In other words, the light source array uses the gating manner in FIG. 4b, and the pixel array uses the gating manner in FIG. 7b. Further, gating may be performed in an order from the first column to the last column, or may be performed in an order from the last column to the first column, or may be performed in an order from a middle column to an edge column, or the like. An order of column-based gating is not limited in this application. In addition, it should be further noted that the light source array and the pixel array are gated for working at the same time.

In a possible implementation, the transmitting field of view of each light source in the light source array is in a spatial one-to-one correspondence with a receiving field of view of each pixel in the pixel array. To be specific, one pixel corresponds to one receiving field of view, one light source corresponds to one transmitting field of view, and one receiving field of view is spatially aligned with one transmitting field of view. To ensure that an echo signal can be received as far as possible, the receiving field of view is usually designed to be slightly larger than the transmitting field of view.

Further, one-to-one alignment of the transmitting field of view and the receiving field of view may be implemented based on an optical principle of focal plane imaging. To be specific, each light source in the light source array is located on an object plane of an optical imaging system, and a photosensitive surface of each pixel in the pixel array is located on an image plane of the optical imaging system. The optical imaging system may include a transmitting optical system and a receiving optical system. Alight source in the light source array is located on an object-side focal plane of the transmitting optical system, and a photosensitive surface of a pixel in the pixel array is located on an image-side focal plane of the receiving optical system. Signal light transmitted by a light source in the light source array is propagated to the detection region by using the transmitting optical system, and an echo signal obtained after an object in the detection region reflects the signal light may be imaged on the image-side focal plane by using the receiving optical system. Therefore, the transmitting optical system and the receiving optical system can be relatively simple and can be modularized, so that the detection system can have a small size, high integration, and the like. Based on this, an optical lens used in the transmitting optical system is generally the same as an optical lens used in the receiving optical system.

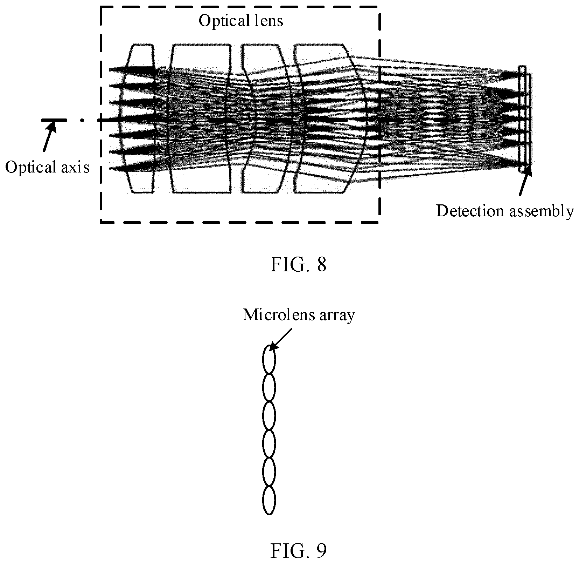

FIG. 8 is a schematic diagram of a structure of an optical lens according to this application. The optical lens includes at least one lens element, and the lens element may be, for example, a lens. For example, in FIG. 8, the optical lens includes four lenses. An optical axis of the optical lens is a straight line that passes through a spherical center of each lens shown in FIG. 8.

It should be noted that the optical lens may be rotationally symmetric about the optical axis. For example, the lens element in the optical lens may be a single spherical lens, or may be a combination of a plurality of spherical lenses (for example, a combination of concave lenses, a combination of convex lenses, or a combination of a convex lens and a concave lens). A plurality of spherical lenses are combined to help improve imaging quality of the detection system and reduce aberration of the optical imaging system. It should be understood that there are a plurality of different types of convex lenses and concave lenses. For example, the convex lenses include a double-convex lens, a plano-convex lens, and a concavo-convex-lens, and the concave lenses include a double-concave lens, a plano-concave lens, and a concavo-convex-lens. This helps improve reuse of optical components of the detection system, and facilitates installation and commissioning of the detection system.

It should be noted that the lens element in the optical lens may alternatively be a single aspheric lens or a combination of a plurality of aspheric lenses. This is not limited in this application.

In a possible implementation, a material of the lens element in the optical lens may be an optical material such as glass, resin, or crystal. When the material of the lens element is resin, the material helps reduce mass of the detection system. When the material of the lens element is glass, the material helps further improve imaging quality of the detection system. Further, to effectively suppress a temperature drift, the optical lens includes at least one lens element made of a glass material.

It should be understood that a structure of the transmitting optical system may alternatively be another structure that can implement collimation and/or beam expansion and/or modulation of energy distribution in the angular space, on the signal light transmitted by the light source, for example, a microlens array (referring to FIG. 9) or a micro optical system attached to a surface of the light source. Details are not described herein again. The microlens array may be one or more columns. This is not limited in this application. It should be noted that the transmitting optical system and the receiving optical system may alternatively have different architectures. This is not limited in this application.

Further, optionally, the detection system may further include a control module. The control module may be a central processing unit (central processing unit, CPU), or may be another general purpose processor (for example, a microprocessor or any conventional processor), a field programmable gate array (field programmable gate array, FPGA), a signal data processing (digital signal processing, DSP) circuit, an application-specific integrated circuit (application-specific integrated circuit, ASIC), a transistor logic device, another programmable logic device, or any combination thereof.

In a possible implementation, when the detection system is applied to a vehicle, the control module may be configured to plan a traveling path based on determined association information of the detection region, for example, avoid an obstacle on a path to be traveled.

It should be noted that the architecture of the detection system provided above is merely an example. The architecture of the detection system is not limited in this application. For example, the light source array in the detection system may alternatively be one row or one column. Further, the detection system may further include a scanner. Each time the scanner is located at a scanning angle, power of signal light transmitted by a light source in this row or column is one power. For example, the scanner is located at a scanning angle A, and the light source in this row or column transmits signal light A at power A; or the scanner is located at a scanning angle B, and the light source in this row or column transmits signal light B at power B.

Based on the foregoing content, the following provides a possible application scenario of the detection system in this application.

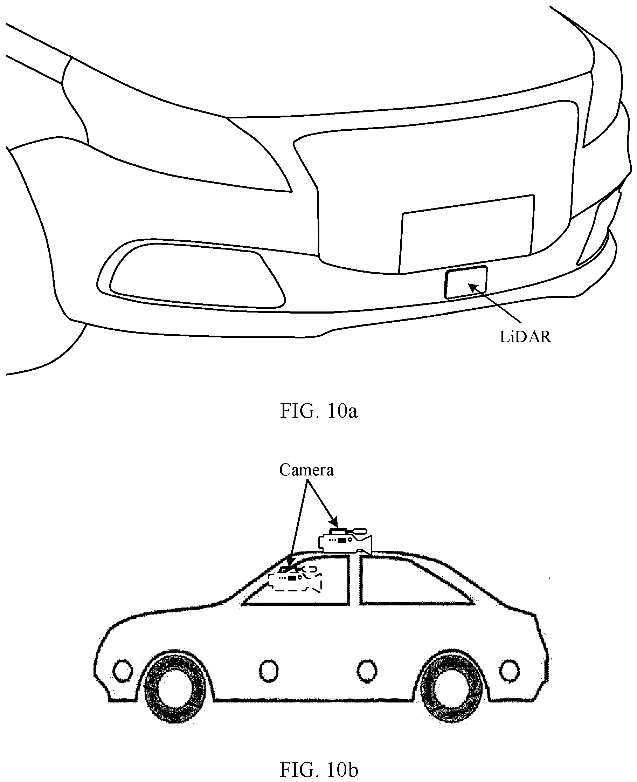

In a possible application scenario, the detection system may be a LiDAR. Referring to FIG. 10a, the LiDAR may be installed on a vehicle (for example, an unmanned vehicle, an intelligent vehicle, an electric vehicle, or a digital vehicle) as a vehicle-mounted LiDAR. The LiDAR may be deployed in any one or more of four directions of the vehicle: front, rear, left, and right, to capture ambient environment information of the vehicle. FIG. 10a is an example of deployment of the LiDAR in the front of the vehicle. A region that can be sensed by the LiDAR may be referred to as a detection region of the LiDAR, and a corresponding field of view may be referred to as a full field of view. The LiDAR may obtain longitude and latitude, a speed, and an orientation of the vehicle, or association information (for example, a distance of an object, a moving speed of an object, a posture of an object, or a greyscale image of an object) of an object (for example, another nearby vehicle) within a range in real time or periodically. The LiDAR or the vehicle may determine a location of the vehicle and/or perform path planning based on the association information. For example, the location of the vehicle is determined by using the longitude and the latitude. Alternatively, a traveling direction and a destination of the vehicle in a future period of time are determined by using the speed and the orientation. Alternatively, a quantity of obstacles, density of obstacles, and the like around the vehicle are determined by using distances to the surrounding objects. Further, optionally, assisted driving, self-driving, or the like of the vehicle may be implemented with reference to a function of an advanced driving assistance system (advanced driving assistant system, ADAS). It should be understood that a principle of detecting the association information of the object by the LiDAR is as follows: The LiDAR transmits signal light in a specific direction. If an object exists in the detection region of the LiDAR, the object may reflect the received signal light back to the LiDAR (the reflected signal light may be referred to as an echo signal), and then the LiDAR determines the association information of the object based on the echo signal.

In another possible application scenario, the detection system may be a camera. Referring to FIG. 10b, the camera may also be installed on a vehicle (for example, an unmanned vehicle, an intelligent vehicle, an electric vehicle, or a digital vehicle) as a vehicle-mounted camera. The camera may obtain measurement information such as a distance and a speed of an object in the detection region in real time or periodically, to provide necessary information for operations such as lane correction, vehicle distance maintenance, and vehicle reversal. The vehicle-mounted camera can implement the following functions and the like: (a) Object recognition and classification, such as recognition of lane lines, traffic light recognition, and traffic sign recognition. (b) Free space (FreeSpace) detection: For example, safety boundaries (free traveling areas) for traveling of the vehicle may be defined, and mainly vehicles, edges of common roads, edges of side stones, boundaries without visible obstacles, and unknown boundaries are defined. (c) Capability of detecting transverse moving objects, for example, detecting and tracking transverse moving pedestrians and vehicles passing through crossroads. (d) Positioning and mapping, for example, positioning and mapping based on a visual simultaneous localization and mapping (simultaneous localization and mapping, SLAM) technology.

It should be noted that the foregoing application scenario is merely an example. The detection system provided in this application may be further applied to a plurality of other possible scenarios, and is not limited to the scenario shown in the foregoing example. For example, the LiDAR may also be installed on an uncrewed aerial vehicle as an airborne radar. For another example, the LiDAR may also be installed in a roadside unit (road side unit, RSU), and may be used as a roadside traffic LiDAR, to implement intelligent vehicle-road cooperative communication. For another example, the LiDAR may be installed on an automated guided vehicle (automated guided vehicle, AGV), where the AGV is a transport vehicle equipped with an electromagnetic or optical automatic navigation apparatus, capable of travelling along a specified navigation path, and having safety protection and various load-moving functions. Details are not exhaustively listed herein. It should be understood that the application scenario described in this application is intended to describe the technical solutions of this application more clearly, and does not constitute a limitation on the technical solutions provided in this application. A person of ordinary skill in the art may know that, with emergence of a new application scenario, the technical solutions provided in this application are also applicable to a similar technical problem.

Based on the foregoing content, the application scenario may be applied to fields of unmanned driving, self-driving, assisted driving, intelligent driving, networked vehicles, security monitoring, remote interaction, mapping, artificial intelligence, and the like.

It should be noted that the method in this application may be applied to a scenario in which the object and the detection system are relatively stationary, or a scenario in which a frame rate of images collected by the detection system is low in comparison with a relative speed of the object and the detection system.

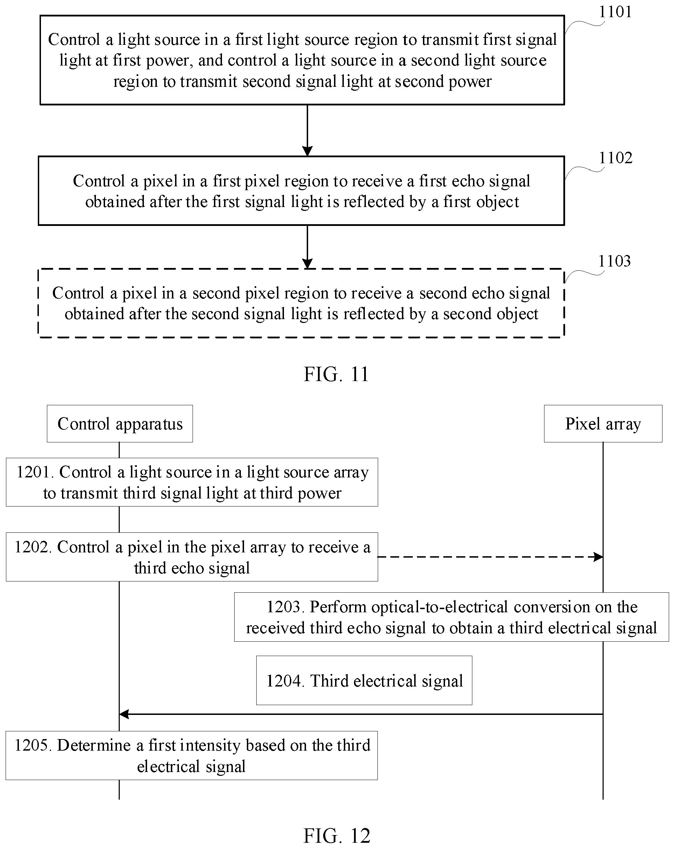

Based on the foregoing content, FIG. 11 is a schematic flowchart of a detection control method according to this application. The detection control method may be performed by a control apparatus. The control apparatus may belong to a detection system (for example, the control apparatus is the foregoing control module), or may be a control apparatus independent of a detection system, for example, may be a chip or a system-on-a-chip. When the control apparatus belongs to a vehicle, the control apparatus may be a domain processor in the vehicle, or may be an electronic control unit (electronic control unit, ECU) in the vehicle, or the like. The method may be applied to the detection system in any one of the foregoing embodiments, and may include the following steps.

Step 1101: The control apparatus controls a light source in a first light source region to transmit first signal light at first power, and controls a light source in a second light source region to transmit second signal light at second power.

The first light source region corresponds to a first pixel region, a spatial position of a first object corresponds to the first pixel region, and the second light source region corresponds to a second pixel region. It may also be understood that a first echo signal obtained after the first signal light transmitted by the light source in the first light source region is reflected by the first object in a detection region may be received by a pixel in the first pixel region, and that a second echo signal obtained after the second signal light transmitted by the light source in the second light source region is reflected by a second object in the detection region may be received by a pixel in the second pixel region. In other words, the pixel in the first pixel region is configured to receive the first echo signal obtained after the first signal light is reflected by the first object, and the pixel in the second pixel region is configured to receive the second echo signal obtained after the second signal light is reflected by the second object. It should be understood that the first pixel region and the second pixel region are two different regions in the pixel array, and that the first light source region and the second light source region are two different regions in the light source array. With reference to FIG. 3, if the first pixel region may be, for example, a region formed by pixel 43, pixel 44, and pixel 45, that is, if pixels in the first pixel region include pixel 43, pixel 44, and pixel 45, corresponding light sources included in the first light source region include light source 43, light source 44, and light source 45. It should be noted that the pixel region may be represented by using row numbers and column numbers of pixels. For example, the first pixel region may be represented as (4, 3) to (4, 5). The light source region may also be represented by using row numbers and column numbers of light sources. For example, the first light source region may be represented as (4, 3) to (4, 5). In addition, a shape of the first pixel region may be a rectangle, a square, or another pattern. It should be understood that each pixel in the pixel array has a corresponding identifier.

In a possible implementation, the second pixel region may be a region formed by all pixels except those in the first pixel region in the pixel array (with reference to FIG. 3, the second pixel region may be a region formed by pixels except pixel 43, pixel 44, and pixel 45 in the pixel array), or may be a region formed by some pixels except those in the first pixel region.

In a possible implementation, energy (or intensity) of the first echo signal obtained after the first signal light emitted to the first object is reflected by the first object is high. It should be understood that, factors that affect energy of an echo signal include but are not limited to a distance between an object and a detection system, distribution of the echo signal reflected by the object (for example, a Lambertian reflector object uniformly reflects received signal light in all directions, that is, the echo signal is uniformly distributed in all directions), reflectivity of the object, and the like. For example, the first object may be an object that is close to the detection system; or the first object is a high-reflectivity object (for example, a mirror reflector, a metal reflector, a retro-reflector, or a mixed reflector with weak diffuse reflection components); or the first object is an object that centrally reflects an echo signal along a direction of the detection system; or the first object is a high-reflectivity object that is close to the detection system; or the first object is an object that is close to the detection system and centrally reflects an echo signal along a direction of the detection system; or the first object is a high-reflectivity object that centrally reflects an echo signal along a direction of the detection system; or the first object is a high-reflectivity object that is close to the detection system and centrally reflects an echo signal along a direction of the detection system. When the detection system using this method is applied to a vehicle, the high-reflectivity object includes but is not limited to a road sign, a warning sign, a signpost, a roadside safety post, a protective fence, a corner convex mirror, a vehicle license plate, a highly reflective coating sticker on a vehicle body, and the like.

For example, if a distance from the first object to the detection system is the same as a distance from the second object to the detection system, and distribution of the echo signals reflected by the two objects is the same (for example, both the first object and the second object are Lambertian reflector), reflectivity of the first object is higher than reflectivity of the second object. For another example, if reflectivity of the first object is the same as reflectivity of the second object, and distribution of the echo signals reflected by the two objects is the same, the first object is closer to the detection system than the second object. For another example, if a distance from the first object to the detection system is the same as a distance from the second object to the detection system, and reflectivity of the two objects is the same, the first echo signal from the first object is more concentrated along the direction of the detection system (that is, distribution of the first echo signal is more concentrated along the direction of the detection system), the first echo signal is less distributed in other directions, the second echo signal from the second object is less distributed along the direction of the detection system, or the second echo signal from the second object is uniformly distributed in all directions. Details are not exhaustively listed herein.

Herein, the second power is higher than the first power. In an optional manner, the first power and the second power may be working parameters preset by the detection system, for example, may be prestored in the detection system (for example, prestored in a configuration table of the detection system), and the control apparatus may obtain the first power and the second power through table lookup or the like. In another optional manner, a decrease of the first power relative to the second power may be obtained by the control apparatus in a manner of self-feedback or the like. Specifically, the control apparatus may determine the decrease of the first power relative to the second power by using previously collected data. For example, the second power may be peak power of the light source.

A possible implementation of step 1101 may be: the control apparatus sends a first control signal to the light source in the first light source region, and sends a second control signal to the light source in the second light source region, where the first control signal is used to control the light source in the first light source region to transmit the first signal light at the first power, and the second control signal is used to control the light source in the second light source region to transmit the second signal light at the second power.

Correspondingly, the light source in the first light source region may transmit the first signal light at the first power based on the first control signal. The light source in the second light source region may transmit the second signal light at the second power based on the second control signal. Further, the first light source region may be gated in a first gating manner, and the gated light source in the first light source region may transmit the first signal light at the first power to the detection region. The light source in the second light source region may be gated in the first gating manner, and the gated light source in the second light source region may transmit the second signal light at the second power to the detection region. Herein, for example, the first gating manner may be gating point by point, row by row, column by column, based on a region (ROI), or based on a specific order; or may be gating a plurality of rows at a time, where the plurality of rows may be adjacent, may be equally spaced, or may be unequally spaced; or may be gating all light sources in the first light source region at a time; or may be gating all light sources in the second light source region at a time. It should be understood that the first gating manner is related to a physical connection relationship between the light sources in the light source array. For details, refer to the foregoing related descriptions. Details are not described herein again. In addition, a specific gating manner used by the light source array may be indicated by indication information carried in the first control signal (and the second control signal). For example, the indication information may be an addressing time sequence of the light sources in the first light source region (and an addressing time sequence of the light sources in the second light source region). In other words, the first control signal may be further used to control the addressing time sequence of the first light source region, and the second control signal may be further used to control the addressing time sequence of the second light source region. For another example, a specific gating manner used by the light source array may alternatively be preset or prescribed. This is not limited in this application.

It should be noted that a possible manner of determining the first pixel region and the second pixel region may be described in the following manners 1 to 4. Details are not described again.

Step 1102: The control apparatus controls the pixel in the first pixel region to receive the first echo signal obtained after the first signal light is reflected by the first object.

In a possible implementation, the control apparatus may control gating of the pixel in the first pixel region, that is, control reading of data collected by the pixel in the first pixel region based on the first echo signal, where the gated pixel in the first pixel region may be configured to receive the first echo signal. With reference to FIG. 3, the control apparatus may control gating of pixel 43, pixel 44, and pixel 45 in the first pixel region.

For example, the control apparatus may send a seventh control signal to the first pixel region in the pixel array, where the seventh control signal is used to control gating of the first pixel region in the pixel array. In a possible implementation, the seventh control signal may be a time sequence signal for gating the pixel in the first pixel region.

In a possible implementation, a manner of gating the pixel in the first pixel region is consistent with a manner of gating the light source in the first light source region.

It should be noted that step 1101 and step 1102 do not indicate a sequence, and the steps may be performed synchronously. For example, the control apparatus may further separately send a first synchronization signal (that is, a same clock signal) to the first light source region and the first pixel region, to indicate synchronous gating of the first light source region and the first pixel region. Step 1103: The control apparatus may further control the pixel in the second pixel region to receive the second echo signal obtained after the second signal light is reflected by the second object.

Step 1103 is an optional step.

For example, the control apparatus may send an eighth control signal to the second pixel region in the pixel array, where the eighth control signal is used to control gating of the second pixel region in the pixel array.

In a possible implementation, a manner of gating the pixel in the second pixel region is consistent with a manner of gating the light source in the second light source region.

Based on the spatial position of the first object, step 1101 to step 1103 are performed to reduce the first power of the light source in the first light source region corresponding to the first pixel region corresponding to the spatial position of the first object, to help reduce an intensity (or referred to as energy) of the first signal light. This can reduce the intensity (or referred to as energy) of the first echo signal, and further help reduce the first echo signal entering other pixels than those in the first pixel region. This helps reduce interference caused by the first echo signal to the other pixels (for example, pixels in the second pixel region) than those in the first pixel region.

Further, optionally, the pixel in the first pixel region may perform optical-to-electrical conversion on the received first echo signal to obtain a first electrical signal. The pixel in the second pixel region may perform optical-to-electrical conversion on the received second echo signal to obtain a second electrical signal. The control apparatus may receive the first electrical signal from the first pixel region, receive the second electrical signal from the second pixel region, and determine association information of the detection region based on the first electrical signal and the second electrical signal. The association information of the detection region includes but is not limited to one or more of distance information of the first object, an azimuth of the first object, a speed of the first object, greyscale information of the first object, distance information of the second object, an azimuth of the second object, a speed of the second object, greyscale information of the second object, and the like.

The following example shows four possible manners of determining the first pixel region. Manner 1: Determine the first pixel region based on obtained intensity information.

It may also be understood that the pixels included in the first pixel region are determined based on the obtained intensity information. In other words, the pixels that belong to the first pixel region are determined based on the obtained intensity information.

FIG. 12 is a schematic flowchart of a method for determining a first pixel region according to this application. The method includes the following steps.

Step 1201: A control apparatus controls a light source in a light source array to transmit third signal light at third power.

The third power may be equal to second power. For example, the third power may alternatively be peak power.

In a possible implementation, the control apparatus may send a third control signal to the light source array, where the third control signal is used to control the light source in the light source array to transmit the third signal light at the third power.

Further, optionally, the light source in the light source array may be gated in a second gating manner, and transmit the third signal light at the third power to a detection region. It should be noted that the second gating manner may be the same as or different from a first gating manner. This is not limited in this application. For example, the second gating manner may be indicated by indication information carried in the third control signal. For example, the indication information may be an addressing time sequence of the light source in the light source array, that is, the third control signal may be further used to control an addressing time sequence of the light source array. Alternatively, the second gating manner may be preset or prescribed. This is not limited in this application. In addition, the second gating manner may be the same as or different from the first gating manner. This is not limited in this application.

For example, the control apparatus sends the third control signal to the light source array, where the third control signal is used to control the light source in the light source array to be gated in the second gating manner and transmit the third signal light at the third power.

Further, optionally, a third drive signal may be generated for the light source array based on the third control signal, and driven by the drive signal (for example, a current), the light source array may transmit the third signal light at the third power in the second gating manner. It should be understood that an addressing time sequence of the drive signal is consistent with that of the light source in the light source array.

With reference to FIG. 3, the light source array includes 7×7 light sources, and light sources gated in the second gating manner among the 7×7 light sources may transmit the third signal light at the third power to the detection region. After all light sources in the light source array are gated, 7×7 third signal light may be transmitted to the detection region (7×7 flares may be formed in the detection region), and a first object and/or a second object in the detection region may reflect the 7×7 third signal light to obtain 7×7 third echo signals.

Step 1202: The control apparatus controls a pixel in a pixel array to receive a third echo signal.

The third echo signal includes reflected light obtained after the third signal light is reflected by the first object and/or the second object. In other words, the third echo signal may be reflected light obtained after the third signal light is reflected by the first object, or may be reflected light obtained after the third signal light is reflected by the second object, or may include both reflected light reflected by the first object and reflected light reflected by the second object.

In a possible implementation, the control apparatus may send a fourth control signal to the pixel array, where the fourth control signal is used to control gating of the pixel in the pixel array in the second gating manner. For example, the fourth control signal may be used to control a time sequence for gating the pixel in the pixel array. In a possible implementation, the fourth control signal may be a time sequence signal for gating the pixel in the pixel array.

Herein, the second gating manner of gating the pixel in the pixel array in step 1202 is consistent with the second gating manner of gating the light source in the light source array in step 1201. For details, refer to the related description of required consistency between the manner of gating the light source in the light source array and the manner of gating the pixel in the pixel array. For example, a light source in a first column of the light source array is gated in step 1201, and a pixel in a first column corresponding to the light source in the first column of the pixel array is gated in step 1202. For another example, a light source in a first row of the light source array is gated in step 1201, and a pixel in a first row corresponding to the light source in the first row of the pixel array is gated in step 1202.

It should be noted that the control apparatus further needs to separately send a second synchronization signal (for example, a same clock signal) to the light source array and the pixel array, to indicate synchronous gating of the light source array and the pixel array.

Step 1203: The pixel in the pixel array performs optical-to-electrical conversion on the received third echo signal to obtain a third electrical signal.

Each pixel in the pixel array can output one third electrical signal. With reference to FIG. 3, the pixel array may output 7×7 third electrical signals. In other words, one pixel corresponds to one third electrical signal.

Step 1204: The pixel array sends the third electrical signal to the control apparatus.

Step 1205: The control apparatus may determine a first intensity based on the third electrical signal. It may also be understood that the third electrical signal carries intensity information of the third echo signal, which is referred to as the first intensity.

Herein, one third electrical signal corresponds to one first intensity. With reference to FIG. 3, the control apparatus may determine 7×7 first intensities based on 7×7 third electrical signals.

In a possible implementation, the control apparatus (for example, a signal collection circuit) processes the collected third electrical signal (original signal) to obtain a valid data format and a signal form that can be processed, and then the processing circuit and an algorithm module perform calculation on the valid data obtained by the signal collection circuit, to obtain association information of the object, for example, the intensity of the echo signal used to represent reflectivity of the object. With reference to FIG. 2b, the intensity may be recorded on a vertical coordinate in a statistical histogram. It should be understood that the TDC has an upper count limit, and that the third echo signal reflected by the first object may cause the upper count limit of the TDC to be exceeded, that is, count saturation is reached.

Step 1205: The control apparatus may determine that a pixel corresponding to an intensity greater than or equal to a first preset value among the first intensities is a pixel in a first pixel region. Further, optionally, the control apparatus may further determine that a pixel corresponding to an intensity less than the first preset value among the first intensities is a pixel in a second region.

It may also be understood that the first intensity corresponding to the pixel in the first pixel region is greater than or equal to the first preset value, and/or that the first intensity corresponding to the pixel in the second pixel region is less than the first preset value.

A person skilled in the art may know that the first preset value may alternatively be replaced with a first preset range, and whether a pixel is a pixel in the first pixel region or the second pixel region is determined based on whether the first intensity falls within the first preset range. For example, the control apparatus may determine that a pixel corresponding to an intensity that does not fall within the first preset range is a pixel in the first pixel region. Further, optionally, the control apparatus may further determine that a pixel corresponding to an intensity falling within the first preset range is a pixel in the second region. For another example, the control apparatus may determine that a pixel corresponding to an intensity falling within the first preset range is a pixel in the first pixel region. Further, optionally, the control apparatus may further determine that a pixel corresponding to an intensity not falling within the first preset range is a pixel in the second region. For another example, the control apparatus may determine that a pixel corresponding to an intensity falling within the first preset range is a pixel in the first pixel region. Further, optionally, the control apparatus may further determine that a pixel corresponding to an intensity falling within a second preset range is a pixel in the second region. Based on specific implementation, there may be more pixel regions such as a third pixel region, to distinguish between different signal intensity ranges. This is not specifically limited in this application.

With reference to FIG. 3, for example, the control apparatus determines that first intensities corresponding to third electrical signals output by pixel 43, pixel 44, and pixel 45 are greater than or equal to the first preset value. Therefore, it can be determined that the pixels in the first pixel region include pixel 43, pixel 44, and pixel 45. It should be understood that the pixel array may output a correspondence between a pixel number and a third electrical signal to the control apparatus. For example, pixel 43 may send the third electrical signal and the pixel number 43 to the control apparatus.

Herein, the first preset value may be a vertical coordinate value that is close to saturation or already saturated in the statistical histogram.

Manner 2: Determine the first pixel region based on obtained distance information and intensity information.

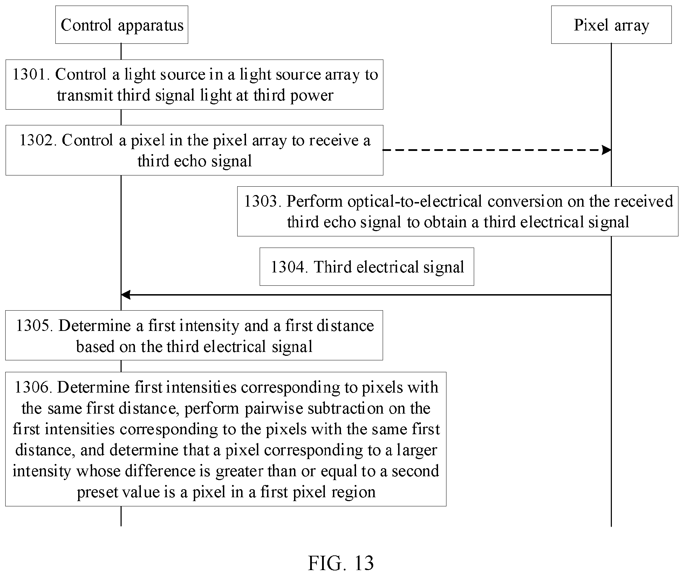

FIG. 13 is a schematic flowchart of another method for determining a first pixel region according to this application. The method includes the following steps.

Step 1301: A control apparatus controls a light source in a light source array to transmit third signal light at third power.

For step 1301, refer to the description of step 1201. Details are not described herein again.

Step 1302: The control apparatus controls a pixel in a pixel array to receive a third echo signal. For step 1302, refer to the description of step 1202. Details are not described herein again.

Step 1303: The pixel in the pixel array performs optical-to-electrical conversion on the received third echo signal to obtain a third electrical signal.

For step 1303, refer to the description of step 1203. Details are not described herein again.

Step 1304: The pixel array sends the third electrical signal to the control apparatus.

Step 1305: The control apparatus determines a first distance and a first intensity based on the third electrical signal.

Herein, one third electrical signal corresponds to one first distance and one first intensity. It may also be understood that the pixel, the third electrical signal, the first distance, and the first intensity are in a one-to-one correspondence.

In a possible implementation, the control apparatus (for example, a signal collection circuit) processes the collected third electrical signal (original signal) to obtain a valid data format and a signal form that can be processed, and then the processing circuit and an algorithm module perform calculation on the valid data obtained by the signal collection circuit, to obtain association information of the object, for example, an intensity of the echo signal used to represent reflectivity of the object, or a time of flight of the echo signal. Further, the first distance may be determined based on the time of flight. With reference to FIG. 2b, the flight time and the intensity may be represented by using a statistical histogram. A vertical coordinate in the statistical histogram may record the intensity. The time of flight may be collected and recorded by the TDC. The maximum number of bits of the TDC determines a maximum amount of data that can be recorded. It should be understood that the TDC has an upper count limit, and that the third echo signal reflected by a first object may cause the upper count limit of the TDC to be exceeded, that is, count saturation is reached.

Step 1306: The control apparatus determines first intensities corresponding to pixels with the same first distance, performs pairwise subtraction on the first intensities corresponding to the pixels with the same first distance, and determines that a pixel corresponding to a larger intensity whose difference is greater than or equal to a second preset value is a pixel in the first pixel region. Further, a pixel corresponding to an intensity whose difference is less than the second preset value may be determined as a pixel in the second pixel region. Further, a pixel corresponding to a smaller intensity whose difference is greater than or equal to the second preset value may be determined as a pixel in the second pixel region.

It may also be understood that a difference between a first intensity corresponding to a pixel in the first pixel region and a first intensity corresponding to a pixel in the second pixel region is greater than or equal to the second preset value, and that a first distance corresponding to the pixel in the first pixel region is the same as a first distance corresponding to the pixel in the second pixel region. With reference to FIG. 3, the control apparatus may first determine which of 7×7 first distances are the same, further perform pairwise subtraction to determine differences between first intensities corresponding to the pixels with the same first distance, and determine a pixel corresponding to a larger one of two first intensities whose difference is greater than the second preset value as a pixel in the first pixel region. Herein, the second preset value may be less than a first preset value.

It should be noted that, in a detection region of a detection system, there is a small difference or even no difference between intensities of echo signals reflected by objects at a same distance. If the intensity difference is large, it indicates that the first object may exist. It may also be understood that, when the first object exists in the detection region, a first intensity obtained after the pixel in the pixel array collects the third signal light reflected by the first object is usually much greater than an intensity obtained after the third signal light is reflected by a second object at a same distance, or even greater than a first intensity obtained after the third signal light is reflected by a second object at a shorter distance, or even count saturation occurs. The indicator of the intensity difference may be manually defined and is related to an actual working condition such as an ambient light intensity. For example, if the intensity difference does not exceed ±10%, the difference is small; or if the intensity difference exceeds ±10%, it is considered that the difference is large.

Manner 3: Determine based on an obtained point cloud image.

It should be noted that, if the first object exists in the detection region, the point cloud image obtained by the control apparatus is affected. Because the first object reflects a strong third echo signal (including an echo signal formed by reflection by the first object and an echo signal formed by reflected background noise), and in addition to triggering the pixel in the first pixel region corresponding to a spatial position of the first object to respond and output (saturation may be caused) the third electrical signal, the third echo signal further causes optical interference and affects other pixels around the first pixel region, in the output point cloud image, a size of the first object and definition and sharpness of a contour edge deteriorate, a large quantity of stray points are distributed, and a phenomenon such as stretching and smearing exists in an overall contour, that is, distribution of a point cloud image corresponding to the surrounding of the spatial position of the first object (an extension, expansion, or the like of point cloud distribution may exist in a front-back, left-right, and top-down directions in the 3D point cloud image) is abnormal distribution or the like.

Further, the control apparatus may determine first intensities of stray points in a region in which the stray points are distributed, and determine a point corresponding to an intensity greater than a third preset value among the first intensities as a pixel in the first pixel region. The third preset value may be preset. For example, the third preset value is equal to a saturation intensity multiplied by a coefficient less than 1. In a possible implementation, the third preset value may be an intensity isoheight in the point cloud image, and points within an intensity isoheight range in the region in which the stray points are distributed are determined as pixels in the first pixel region.

Manner 4: Determine the first pixel region based on at least two frames of images.

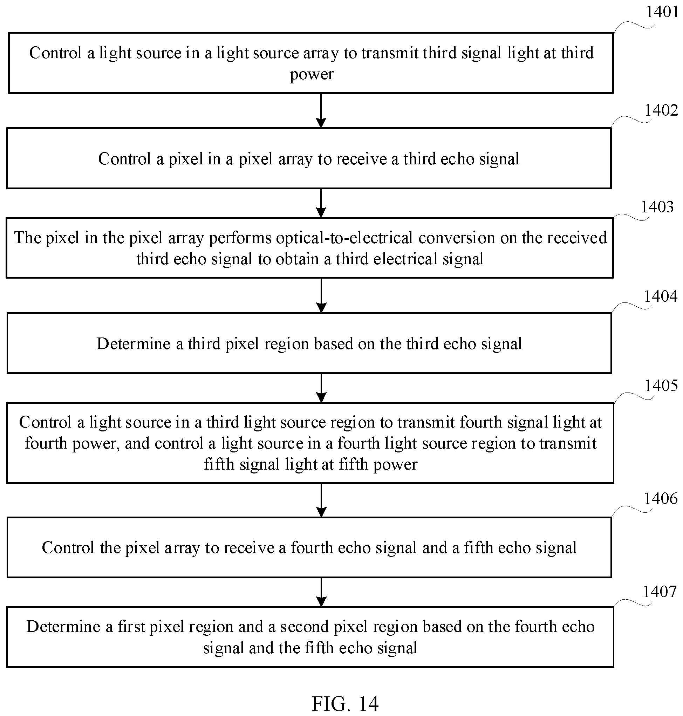

FIG. 14 is a schematic flowchart of another method for determining a first pixel region according to this application. The method includes the following steps.

Step 1401: A control apparatus controls a light source in a light source array to transmit third signal light at third power.

For step 1401, refer to the description of step 1201. Details are not described herein again.

Step 1402: The control apparatus controls a pixel in a pixel array to receive a third echo signal. For step 1402, refer to the description of step 1202. Details are not described herein again.

Step 1403: The pixel in the pixel array performs optical-to-electrical conversion on the received third echo signal to obtain a third electrical signal.

For step 1403, refer to the description of step 1203. Details are not described herein again.

Step 1404: The control apparatus determines a third pixel region based on the third echo signal.

A first intensity corresponding to a pixel in the third pixel region is greater than or equal to a fourth preset value. The fourth preset value may be equal to a first preset value, for example, may also be a vertical coordinate value that is close to saturation or already saturated in a statistical histogram. For a possible implementation of step 1404, refer to step 1205 in the foregoing manner 1, or refer to step 1305 and step 1306 in the foregoing manner 2.

The third pixel region may be determined based on the foregoing step 1401 to step 1404. It may also be understood that a frame of image may be obtained based on the foregoing step 1401 to step 1404, and may be referred to as a first image. The third pixel region includes a first pixel region, and may further include a pixel interfered with by an echo signal reflected by a first object. In other words, the third pixel region may already include a pixel affected by optical interference of the echo signal reflected by the first object. With reference to FIG. 3, pixels in the third pixel region include pixel 33, pixel 34, pixel 35, pixel 43, pixel 44, pixel 45, pixel 53, pixel 54, and pixel 55. These pixels may already include pixels interfered with by the echo signal reflected by the first object. To further recognize the first pixel region corresponding to a spatial position of the first object, in other words, to recognize which pixels in the third pixel region are interfered with by the echo signal from the first object, the following step 1405 to step 1407 may be further performed. It should be noted that, if a gating manner of the pixel array is gating pixels column by column, adjacent pixels in a column direction may suffer optical interference; if a gating manner of the pixel array is gating pixels row by row, adjacent pixels in a row direction may suffer optical interference; or if a gating manner of the pixel array is gating pixels based on a diagonal, adjacent pixels in a diagonal direction may suffer optical interference.

Step 1405: The control apparatus controls a light source in a third light source region to transmit fourth signal light at fourth power, and controls a light source in a fourth light source region to transmit fifth signal light at fifth power.

The fifth power is higher than the fourth power. In a possible implementation, the fifth power may be equal to the foregoing second power, or may be equal to the foregoing third power, and the fourth power may be equal to the foregoing first power. Further, optionally, the fifth power may be peak power. The power at which the light source in the third light source region transmits the fourth signal light is reduced, to help reduce an intensity of a fourth echo signal reflected by the first object. This can reduce interference caused by the fourth echo signal to a fifth echo signal. The third light source region corresponds to the third pixel region. It may also be understood that the fourth echo signal obtained after the fourth signal light transmitted by the light source in the third light source region is reflected by the first object in a detection region may be received by a pixel in the third pixel region.

In a possible implementation, the control apparatus may send a fifth control signal to the light source in the third light source region, and send a sixth control signal to the light source in the fourth light source region, where the fifth control signal is used to control the light source in the third light source region to transmit the fourth signal light at the fourth power, and the sixth control signal is used to control the light source in the fourth light source region to transmit the fifth signal light at the fifth power.

Further, the third light source region may be gated in a third gating manner, and the gated light source in the third light source region may transmit the fourth signal light at the fourth power to the detection region. The light source in the fourth light source region may be gated in the third gating manner, and the gated light source in the fourth light source region may transmit the fifth signal light at the fifth power to the detection region.

It should be noted that the third gating manner may be indicated by indication information carried in the fifth control signal. For example, the indication information may be an addressing time sequence of the light source in the light source array. In other words, the fifth control signal may be further used to control an addressing time sequence of the light source in the third light source region, and the sixth control signal may be further used to control an addressing time sequence of the light source in the fourth light source region. For another example, a specific gating manner used by the light source array may alternatively be preset or prescribed. This is not limited in this application. In addition, the third gating manner may be the same as or different from a first gating manner, and the third gating manner may be the same as or different from a second gating manner. This is not limited in this application either.

For example, the control apparatus sends the fifth control signal to the third light source region, where the fifth control signal is used to control the light source in the third light source region to be gated in the third gating manner and transmit the fourth signal light at the fourth power. The control apparatus sends the fifth control signal to the fourth light source region, where the fifth control signal is used to control the light source in the fourth light source region to be gated in the third gating manner and transmit the fifth signal light at the fifth power.

Step 1406: The control apparatus controls the pixel array to receive the fourth echo signal and the fifth echo signal.

The fourth echo signal includes reflected light obtained after the fourth signal light is reflected by the first object, and the fifth echo signal includes reflected light obtained after the fifth signal light is reflected by a second object.

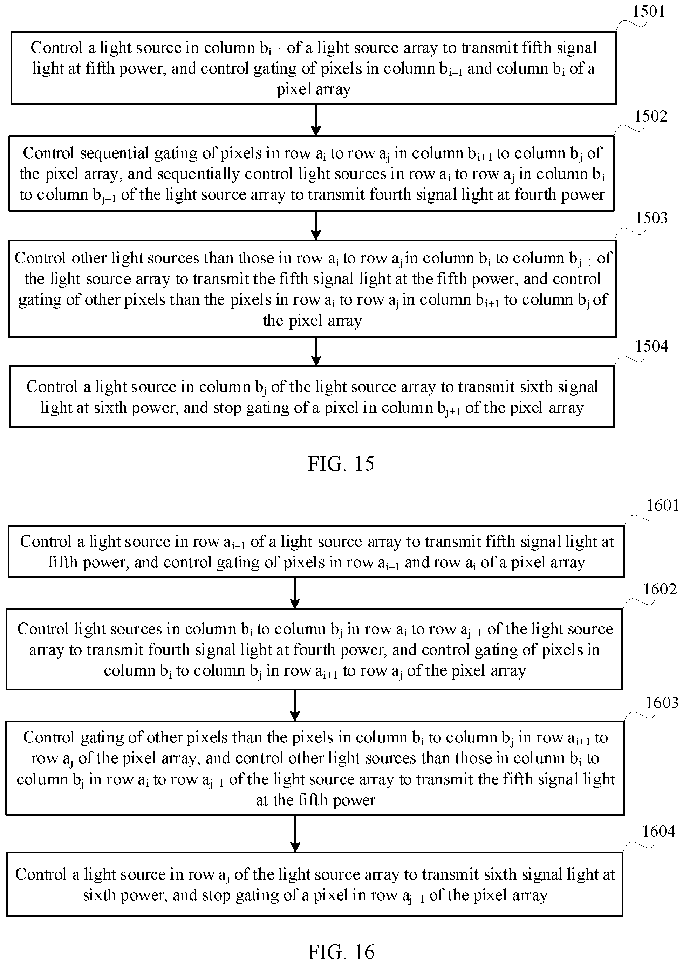

For a possible implementation of step 1406, refer to the following description of FIG. 15 or FIG. 16. Details are not described again.

Step 1407: The control apparatus determines the first pixel region and a second pixel region based on the fourth echo signal and the fifth echo signal.

In a possible implementation, the control apparatus may perform optical-to-electrical conversion on the fourth echo signal and the fifth echo signal to obtain a fourth electrical signal and a fifth electrical signal. The fourth electrical signal carries the intensity (which may be referred to as a second intensity) of the fourth echo signal, and the fifth electrical signal carries an intensity (which may be referred to as a third intensity) of the fifth echo signal. It should be understood that one fourth electrical signal corresponds to one second intensity, and that one fifth electrical signal corresponds to one third intensity. With reference to FIG. 3, the control apparatus may determine 7×7 intensities (including second intensities and third intensities) based on 7×7 electrical signals (including fourth electrical signals and fifth electrical signals).

Further, the control apparatus may determine a pixel corresponding to an intensity greater than or equal to a fifth preset value among the second intensities and the third intensities as a pixel in the first pixel region, and determine a pixel corresponding to an intensity less than the fifth preset value among the second intensities and the third intensities as a pixel in the second pixel region. The fifth preset value may be equal to the first preset value.

In another possible implementation, the control apparatus may perform optical-to-electrical conversion on the fourth echo signal and the fifth echo signal to obtain a fourth electrical signal and a fifth electrical signal. The fourth electrical signal carries the intensity (which may be referred to as a second intensity) of the fourth echo signal and a second distance, and the fifth electrical signal carries an intensity (which may be referred to as a third intensity) of the fifth echo signal and a first distance. It should be understood that one fourth electrical signal corresponds to one second intensity and one second distance, and that one fifth electrical signal corresponds to one third intensity and one first distance. With reference to FIG. 3, the control apparatus may determine 7×7 intensities (including second intensities and third intensities) and 7×7 distances (including second distances and first distances) based on 7×7 electrical signals (including fourth electrical signals and fifth electrical signals).

Further, the control apparatus determines intensities corresponding to pixels with a same distance among the second distances and the first distances, performs pairwise subtraction on the intensities corresponding to the same distance, determines a pixel corresponding to a larger intensity whose difference is greater than or equal to a second preset value as a pixel in the first pixel region, and determines a pixel corresponding to a larger intensity whose difference is less than the second preset value as a pixel in the second pixel region.

With reference to FIG. 3, for example, the control apparatus determines pixel 43, pixel 44, and pixel 45 as pixels in the first pixel region, and determines other pixels than pixel 43, pixel 44, and pixel 45 in the pixel array as the second pixel region.

It should be noted that determining a pixel in the first pixel region based on the third pixel region includes but is not limited to the foregoing possible manners. For example, a centroid algorithm may be further used to determine the first pixel region from the third pixel region. Specifically, a middle region of the third pixel region may be determined as the first pixel region. Alternatively, pixels in a central region of the third pixel region are determined as a quasi-first pixel region, and then a pixel with a large intensity among pixels with large intensity differences in the quasi-first pixel region is determined as a pixel in the first pixel region.

The third pixel region may be first determined by performing step 1401 to step 1407. The third pixel region may include the pixel already interfered with by the reflected light reflected by the first object. The first pixel region corresponding to the spatial position of the first object may be accurately determined from the third pixel region by further adaptively adjusting the power of the light source in the third light source region corresponding to the third pixel region. This helps obtain complete and accurate association information (for example, association information of the first object and the second object) of the detection region in a full field of view.

It should be noted that a process of determining the first pixel region based on the third pixel region in step 1405 to step 1407 may be understood as obtaining a second frame of image (which may be referred to as a second image). A specific process may be divided into five phases: a first phase of gating a region before a first edge region of the third pixel region, a second phase of gating the first edge region of the third pixel region, a third phase of gating the third pixel region, a fourth phase of gating a second edge region of the third pixel region, and a fifth phase of gating a region after the second edge region of the third pixel region. In other words, a pixel (for example, a pixel in a row or column before the first edge region) before the first edge region of the third pixel region is gated in the first phase, a pixel in the first edge region of the third pixel region is gated in the second phase, a pixel in the third pixel region is gated in the third phase, a pixel in the second edge region of the third pixel region is gated in the fourth phase, and a pixel (for example, a pixel in a row or column after the second edge region) after the second edge region of the third pixel region is gated in the fifth phase.

The following describes a process of obtaining a second image with reference to a specific example. FIG. 15 is a schematic flowchart of a method for determining a first pixel region based on a third pixel region according to this application. In this method, for example, a pixel array and a light source array are gated in a column-based gating manner and are gated from a first column.

In the following description, it is assumed that the third pixel region includes column bi to column bⱼ in row ai to row aⱼ of the pixel array, where both ai and bi are integers greater than 1, aⱼ is an integer greater than ai, and bⱼ is an integer greater than bi. It should be understood that pixels included in column bi to column bⱼ in row ai to row aⱼ of the pixel array are pixels corresponding to rows that are row ai to row aⱼ and columns that are column bi to column bⱼ in the pixel array. In addition, the pixels corresponding to column bi to column bⱼ in row ai to row aⱼ are the same as pixels corresponding to row ai to row aⱼ in column bi to column bⱼ.

With reference to FIG. 3, the third pixel region includes a third column to a fifth column in a third row to a fifth row of the pixel array. To be specific, the third pixel region includes pixel 33, pixel 34, pixel 35, pixel 43, pixel 44, pixel 45, pixel 53, pixel 54, and pixel 55.

In a first phase, the control apparatus controls gating of light sources in the light source array column by column, and gated light source columns transmit fifth signal light at fifth power. Correspondingly, the control apparatus controls gating of corresponding pixel columns of the pixel array column by column, and gated pixels receive fifth echo signals from a detection region. For a process of the first phase, refer to step 1201 to step 1203 in the foregoing manner 1 to obtain some fifth electrical signals.

With reference to FIG. 3, the control apparatus controls a light source in the first column to transmit fifth signal light at fifth power; and correspondingly, the control apparatus controls gating of a pixel in the first column.

In a second phase, the control apparatus may perform the following step 1501.

Step 1501: The control apparatus controls a light source in column bᵢ₋₁ of the light source array to transmit fifth signal light at fifth power, and controls gating of pixels in column bᵢ₋₁ and column bi of the pixel array.

A transmitting field of view of the light source in column bᵢ₋₁ corresponds to a receiving field of view of a pixel in column bᵢ₋₁. It should be understood that the pixel in column bᵢ₋₁ is a pixel in a first edge region of the third pixel region.

With reference to FIG. 3, the control apparatus controls a light source in a second column of the light source array to transmit fifth signal light at fifth power; and correspondingly, the control apparatus controls gating of a pixel in a second column and a pixel in the third column of the pixel array. In other words, the pixel in the second column and the pixel in the third column may be jointly configured to receive a fourth echo signal and a fifth echo signal from the detection region. In the second phase, the light source in column bᵢ₋₁ transmits the fifth signal light at the fifth power. An intensity of the fifth signal light is large, and an intensity of the corresponding fifth echo signal is also large. Because the transmitting field of view of the light source in column bᵢ₋₁ corresponds to the receiving field of view of the pixel in column bᵢ₋₁, most energy of the fifth echo signal is transmitted to the pixel in column bᵢ₋₁, and a part of the fifth echo signal enters a pixel in column bi. Two adjacent columns are simultaneously gated, so that subsequent gating of pixels is staggered gated. In this way, impact of interference of an echo signal reflected by a first object on echo signals from other objects (for example, a second object) in the detection region can be reduced. In a third phase, the control apparatus may perform the following steps 1502 and 1503.

Step 1502: The control apparatus controls sequential gating of pixels in row ai to row aⱼ in column bᵢ₊₁ to column bⱼ of the pixel array, and sequentially controls light sources in row ai to row aⱼ in column bi to column bⱼ₋₁ of the light source array to transmit fourth signal light at fourth power.

Herein, the sequentially controlling light sources in row aᵢ to row aⱼ in column bi to column bⱼ₋₁ may be understood as: at moment i, controlling light sources in row aᵢ to row aⱼ in column bi to transmit the fourth signal light at the fourth power, and correspondingly, controlling gating of pixels in row ai to row aⱼ in column bᵢ₊₁; at moment i+1, controlling light sources in row ai to row aⱼ in column bᵢ₊₁ to transmit the fourth signal light at the fourth power, and correspondingly, controlling gating of pixels in row aᵢ to row aⱼ in column bi+₂; and by analogy, at moment j-1, controlling light sources in row ai to row aⱼ in column bⱼ₋₁ to transmit the fourth signal light at the fourth power, and correspondingly, controlling gating of pixels in row ai to row aⱼ in column bⱼ. With reference to FIG. 3, the control apparatus controls light sources (that is, light source 33, light source 43, and light source 53) in a third row to a fifth row in a third column of the light source array to transmit the fourth signal light at the fourth power, and correspondingly, controls gating of pixels (that is, pixel 34, pixel 44, and pixel 54) in the third row to the fifth row in the fourth column of the pixel array. By analogy, the control apparatus controls light sources (that is, light source 34, light source 44, and light source 54) in the third row to the fifth row in a fourth column of the light source array to transmit the fourth signal light at the fourth power, and correspondingly, controls gating of pixels (that is, pixel 35, pixel 45, and pixel 55) in the third row to the fifth row in the fifth column of the pixel array. It should be noted that a column in which a gated pixel is located and a column in which a gated light source is located are staggered. Specifically, the column in which the gated pixel is located lags by one column behind the column in which the gated light source is located.

In a possible implementation, the fourth power is lower than the fifth power. For example, the fifth power may be peak power.

Step 1503: The control apparatus controls other light sources than those in row aᵢ to row aⱼ in column bi to column bⱼ₋₁ of the light source array to transmit the fifth signal light at the fifth power, and controls gating of other pixels than the pixels in row ai to row aⱼ in column bᵢ₊₁ to column bⱼ of the pixel array.

With reference to FIG. 3, the control apparatus controls other light sources than light sources (that is, light source 33, light source 43, light source 53, light source 34, light source 44, and light source 54) in the third row to the fifth row in the third column and the fourth column of the light source array to transmit the fifth signal light at the fifth power, and correspondingly, controls gating of other pixels than the pixels (that is, pixel 34, pixel 44, pixel 54, pixel 35, pixel 45, and pixel 55) in the third row to the fifth row in the fourth column and the fifth column of the pixel array.

It should be noted that the foregoing step 1502 may alternatively be that the control apparatus controls sequential gating of pixels in column bᵢ₊₁ to column bⱼ of the pixel array, and controls light sources in column bi to column bⱼ₋₁ of the light source array to transmit the fourth signal light at the fourth power. Correspondingly, step 1503 may be that the control apparatus controls gating of other pixels than the pixels in column bᵢ₊₁ to column bⱼ of the pixel array, and controls other light sources than the light sources in column bi to column bⱼ₋₁ of the light source array to transmit the fifth signal light at the fifth power.

With reference to FIG. 3, step 1502 may alternatively be that the control apparatus controls a light source in the third column of the light source array to transmit the fourth signal light at the fourth power, and correspondingly, controls gating of a pixel in the fourth column of the pixel array. By analogy, the control apparatus controls a light source in the fourth column of the light source array to the transmit the fourth signal light at the fourth power, and correspondingly, controls gating of a pixel in the fifth column of the pixel array. Step 1503 may alternatively be controlling other light sources than the light sources in the third column and the fourth column of the light source array to transmit the fifth signal light at the fifth power, and correspondingly, controlling gating of other pixels than those in the fourth column and the fifth column of the pixel array.

In a fourth phase, the control apparatus may perform the following step 1504.

Step 1504: The control apparatus controls a light source in column bⱼ of the light source array to transmit sixth signal light at sixth power, and stops gating of a pixel in column bⱼ₊₁ of the pixel array.

The sixth power may be any power greater than 0.

The light source in column bⱼ is controlled to transmit the sixth signal light at the sixth power, and in this case, no pixel is gated. Therefore, when pixels (for example, the pixel in column bⱼ₊₁) after the third pixel region are gated, gating of pixel columns and light source columns is no longer staggered, that is, the gated pixel columns are aligned with the light source columns. With reference to FIG. 3, a light source in a fifth column of the light source array is controlled to transmit the sixth signal light at the sixth power, and correspondingly, gating of any pixel in the pixel array is stopped. Based on this, when a pixel after the third pixel region is gated, a light source in a sixth column of the light source array is controlled to transmit second signal light at second power; and correspondingly, a pixel in a sixth column of the pixel array is controlled to be gated.

In a fifth phase, the process of the first phase may be repeated. With reference to FIG. 3, the control apparatus controls the light source in the sixth column to transmit the fifth signal light at the fifth power, and the control apparatus controls gating of the pixel in the sixth column of the pixel array, where the gated pixel in the sixth column may receive the fifth echo signal, and so on, until a last column of the light source array is scanned.

It should be noted that each phase in this example is described by using one column as an example. If there are a plurality of columns in each phase, a process of providing one column in a corresponding phase may be repeated. Details are not described again in this application.

Based on the foregoing step 1501 to step 1504, transmit power of the light source in the third light source region is reduced. Therefore, energy of the echo signal reflected by the first object can be reduced, and interference of the echo signal reflected by the first object to surrounding pixels can be reduced. In addition, interference of the echo signal reflected by the first object can be further reduced by using an energy distribution feature of a flare of the signal light transmitted by the light source and performing staggered gating of pixels in the pixel array.

It should be noted that, if the third pixel region starts from the first column of pixels in the pixel array, staggered gating of pixels is not required, pixel columns of the pixel array may be sequentially gated from the first column, and a light source in a corresponding column of the light source array is controlled to transmit the fourth signal light at the fourth power. If a last column of the third pixel region is a last column of the pixel array, the fourth phase and the fifth phase do not need to be performed.

FIG. 16 is a schematic flowchart of another method for determining a first pixel region based on a third pixel region according to this application. In this method, for example, a pixel array and a light source array are gated in a row-based gating manner and are gated from a first row.

It is assumed that the third pixel region includes column bi to column bⱼ in row ai to row aⱼ of the pixel array. For details, refer to the foregoing related descriptions.

In a first phase, a control apparatus controls gating of light sources in the light source array row by row, and the gated light sources transmit fifth signal light at fifth power. Correspondingly, the control apparatus controls gating of pixels in the pixel array row by row, and the gated pixels receive fifth echo signals from a detection region. For a process of the first phase, refer to step 1201 to step 1203 in the foregoing manner 1 to obtain some fifth electrical signals.

With reference to FIG. 3, the control apparatus controls a light source in the first row to transmit fifth signal light at fifth power; and correspondingly, the control apparatus controls gating of a pixel in the first row.

In a second phase, the control apparatus may perform the following step 1601.

Step 1601: The control apparatus controls a light source in row aᵢ₋₁ of the light source array to transmit fifth signal light at fifth power, and controls gating of pixels in row aᵢ₋₁ and row ai of the pixel array.

A transmitting field of view of the light source in row aᵢ₋₁ corresponds to a receiving field of view of a pixel in row aᵢ₋₁. It should be understood that the pixel in row aᵢ₋₁ is a pixel in a first edge region of the third pixel region.

With reference to FIG. 3, the control apparatus controls a light source in a second row of the light source array to transmit fifth signal light at fifth power; and correspondingly, the control apparatus controls gating of a pixel in a second row and a pixel in the third row of the pixel array. In other words, the pixel in the second row and the pixel in the third row may be jointly configured to receive a fourth echo signal and a fifth echo signal from a detection region.

In a third phase, the control apparatus may perform the following steps 1602 and 1603.

Step 1602: The control apparatus controls light sources in column bi to column bⱼ in row ai to row aⱼ₋₁ of the light source array to transmit fourth signal light at fourth power, and controls gating of pixels in column bi to column bⱼ in row ai+i to row aⱼ of the pixel array.

With reference to FIG. 3, the control apparatus controls light sources (that is, light source 33, light source 34, and light source 35) in a third column to a fifth column in a third row of the light source array to transmit the fourth signal light at the fourth power, and correspondingly, controls gating of pixels (that is, pixel 43, pixel 44, and pixel 45) in a third column to a fifth column in a fourth row of the pixel array. By analogy, the control apparatus controls light sources (that is, light source 43, light source 44, and light source 45) in the third column to the fifth column in a fourth row of the light source array to transmit the fourth signal light at the fourth power, and correspondingly, controls gating of pixels (that is, pixel 53, pixel 54, and pixel 55) in the third column to the fifth column in a fifth row of the pixel array. It should be noted that a row in which a gated pixel is located and a row in which a gated light source is located are staggered. Specifically, the row in which the gated pixel is located lags by one row behind the row in which the gated light source is located.

Step 1603: The control apparatus controls gating of other pixels than the pixels in column bi to column bⱼ in row aᵢ₊₁ to row aⱼ of the pixel array, and controls other light sources than those in column bi to column bⱼ in row aᵢ to row aⱼ₋₁ of the light source array to transmit the fifth signal light at the fifth power.

For step 1603, refer to the foregoing step 1503. Specifically, the "row" in the foregoing step 1503 may be replaced with the "column", and the "column" may be replaced with the "row".

In a fourth phase, the control apparatus may perform the following step 1604.

Step 1604: The control apparatus controls a light source in row aⱼ of the light source array to transmit sixth signal light at sixth power, and stops gating of a pixel in row aⱼ₊₁ of the pixel array.

For step 1604, refer to the foregoing step 1504. Specifically, the "row" in the foregoing step 1504 may be replaced with the "column", and the "column" may be replaced with the "row".

In a fifth phase, the process of the first phase may be repeated. With reference to FIG. 3, the control apparatus controls a light source in a sixth row to transmit the fifth signal light at the fifth power, and the control apparatus controls gating of a pixel in a sixth row of the pixel array, where the gated pixel in the sixth row may receive the fifth echo signal, and so on, until a last row of the light source array is scanned.

It should be noted that each phase in this example is described by using one row as an example. If there are a plurality of rows in each phase, a process of providing one row in a corresponding phase in the example may be repeated. Details are not described again in this application.

It should be noted that, if the third pixel region starts from the first row of pixels in the pixel array, staggered gating of pixels is not required, pixel rows of the pixel array may be sequentially gated from the first row, and a light source in a corresponding row of the light source array is controlled to transmit the fourth signal light at the fourth power. If a last row of the third pixel region is a last row of the pixel array, the fourth phase and the fifth phase do not need to be performed.

After a first pixel region corresponding to a spatial position of a first object is determined, accurate association information of the detection region may be obtained by adjusting power of a light source in a first light source region corresponding to the first pixel region and performing staggered gating of pixels in the first pixel region. Specifically, there may be the following five phases: phase A of gating a region before a first edge region of the first pixel region, phase B of gating the first edge region of the first pixel region, phase C of gating the first pixel region, phase D of gating a second edge region of the first pixel region, and phase E of gating a region after the second edge region of the first pixel region. In other words, a pixel (for example, a pixel in a row or column before the first edge region) before the first edge region of the first pixel region is gated in phase A, a pixel in the first edge region of the first pixel region is gated in phase B, a pixel in the first pixel region is gated in phase C, a pixel in the second edge region of the first pixel region is gated in phase D, and a pixel (for example, a pixel in a row or column after the second edge region) after the second edge region of the first pixel region is gated in phase E.

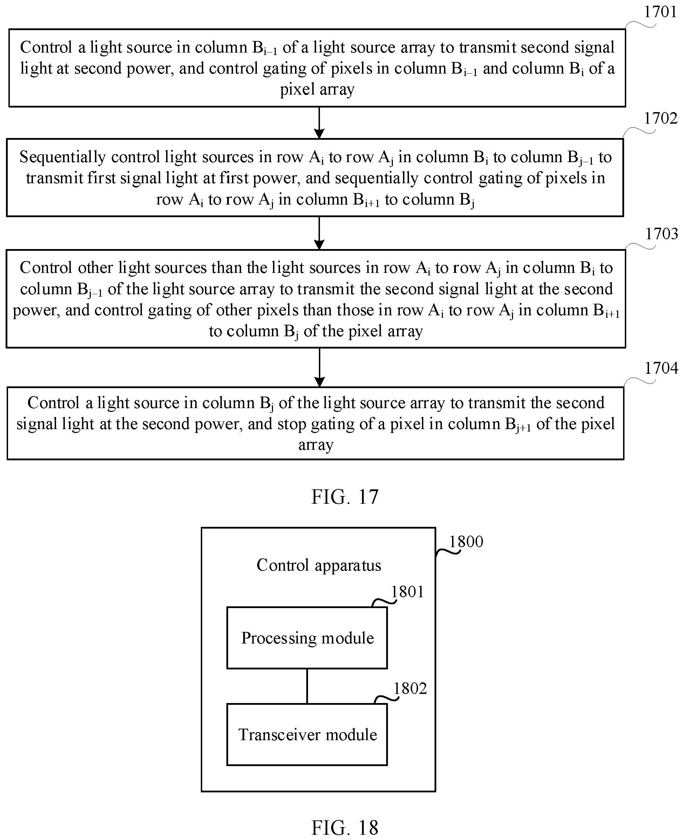

FIG. 17 is a schematic flowchart of a method for obtaining association information in a detection region according to this application. In this method, for example, a pixel array and a light source array are gated in a column-based gating manner and are both gated from a first column.

In the following description, it is assumed that a first pixel region includes column Bᵢ to column Bⱼ in row Aᵢ to row Aⱼ of the pixel array, where both Aᵢ and Bᵢ are integers greater than 1, Aⱼ is an integer greater than Aᵢ, and Bⱼ is an integer greater than Bᵢ. It should be understood that pixels included in column Bᵢ to column Bⱼ in row Aᵢ to row Aⱼ of the pixel array are pixels corresponding to rows that are row Aᵢ to row Aⱼ and columns that are column Bᵢ to column Bⱼ in the pixel array. In addition, the pixels corresponding to column Bᵢ to column Bⱼ in row Aᵢ to row Aⱼ are the same as pixels corresponding to row Aᵢ to row Aⱼ in column Bᵢ to column Bⱼ.

With reference to FIG. 3, the first pixel region includes a fourth row and a third column to a fifth column of the pixel array, that is, the first pixel region includes pixel 43, pixel 44, and pixel 45. In phase A, a control apparatus controls gating of light sources in the light source array column by column, and the gated light source columns transmit first signal light at first power. Correspondingly, the control apparatus controls gating of corresponding pixel columns of the pixel array column by column. With reference to FIG. 3, the control apparatus controls a light source in a first column to transmit the first signal light at the first power, and correspondingly, controls gating of a pixel in a first column, where the gated pixel in the first column may receive a first echo signal from the detection region.

In phase B, the control apparatus controls gating of a pixel in a first edge region of the first pixel region.

Step 1701: The control apparatus controls a light source in column Bᵢ₋₁ of the light source array to transmit second signal light at second power, and controls gating of pixels in column Bᵢ₋₁ and column Bᵢ of the pixel array.

Herein, the gated pixels in column Bᵢ₋₁ and column Bᵢ are configured to receive a second echo signal from the detection region.

A transmitting field of view of the light source in column Bᵢ₋₁ corresponds to a receiving field of view of a pixel in column Bᵢ₋₁. It should be understood that the pixel in column Bᵢ₋₁ is a pixel in the first edge region of the first pixel region.

With reference to FIG. 3, the control apparatus controls a light source in a second column of the light source array to transmit the second signal light at the second power; and correspondingly, the control apparatus controls gating of a pixel in a second column and a pixel in the third column of the pixel array. In other words, the pixel in the second column and the pixel in the third column may be jointly configured to receive the second echo signal from the detection region.

In phase C, the control apparatus controls gating of a pixel in the first pixel region.

Step 1702: The control apparatus sequentially controls light sources in row Aᵢ to row Aⱼ in column Bᵢ to column Bⱼ₋₁ to transmit the first signal light at the first power, and sequentially controls gating of pixels in row Aᵢ to row Aⱼ in column Bi+i to column Bⱼ.

Herein, the sequentially controlling light sources in row Aᵢ to row Aⱼ in column Bᵢ to column Bⱼ₋₁ may be understood as: at moment i, controlling light sources in row Aᵢ to row Aⱼ in column Bᵢ to transmit the first signal light at the first power, and correspondingly, controlling gating of pixels in row Aᵢ to row Aⱼ in column Bᵢ₊₁; at moment i+1, controlling light sources in row Aᵢ to row Aⱼ in column Bᵢ₊₁ to transmit the first signal light at the first power, and correspondingly, controlling gating of pixels in row Aᵢ to row Aⱼ in column Bᵢ₊₂; and by analogy, at moment j-1, controlling light sources in row Aᵢ to row Aⱼ in column Bⱼ₋₁ to transmit the first signal light at the first power, and correspondingly, controlling gating of pixels in row Aᵢ to row Aⱼ in column Bⱼ.

With reference to FIG. 3, the control apparatus controls a light source (that is, light source 43) in a fourth row in a third column of the light source array to transmit the first signal light at the first power, and correspondingly, controls gating of a pixel (that is, pixel 44) in the fourth row in the fourth column of the pixel array. By analogy, the control apparatus controls a light source (that is, light source 44) in the fourth row in a fourth column of the light source array to transmit the first signal light at the first power, and correspondingly, controls gating of a pixel (that is, pixel 45) in the fourth row in the fifth column of the pixel array. It should be noted that a column in which a gated pixel is located and a column in which a gated light source is located are staggered. Specifically, the column in which the gated pixel is located lags by one column behind the column in which the gated light source is located. Because gating of columns of the pixel array is staggered, impact of interference of an echo signal reflected by a first object on echo signals reflected by other objects (for example, a second object) in the detection region can be reduced by using energy at an edge of a flare of the echo signal, an interference phenomenon can be improved, and effective detection can be implemented within a range of a full field of view of a detection system.

Step 1703: The control apparatus controls other light sources than the light sources in row Aᵢ to row Aⱼ in column Bᵢ to column Bⱼ₋₁ of the light source array to transmit the second signal light at the second power, and controls gating of other pixels than those in row Aᵢ to row Aⱼ in column Bᵢ₊₁ to column Bⱼ of the pixel array.

With reference to FIG. 3, the control apparatus controls a light source other than the light source in the fourth row in the third column of the light source array to transmit the second signal light at the second power, and correspondingly, controls gating of a pixel other than the pixel in the fourth row in the fourth column of the pixel array.

It should be noted that the foregoing step 1702 may alternatively be that the control apparatus controls sequential gating of pixels in column Bᵢ₊₁ to column Bⱼ of the pixel array, and controls light sources in column Bᵢ to column Bⱼ₋₁ of the light source array to transmit the first signal light at the first power. Correspondingly, step 1703 may be that the control apparatus controls gating of other pixels than the pixels in column Bᵢ₊₁ to column Bⱼ of the pixel array, and controls other light sources than the light sources in column Bᵢ to column Bⱼ₋₁ of the light source array to transmit the second signal light at the second power.

In phase D, the control apparatus controls gating of a pixel in a second edge region of the first pixel region.

Step 1704: The control apparatus controls a light source in column Bⱼ of the light source array to transmit the second signal light at the second power, and stops gating of a pixel in column Bⱼ₊₁ of the pixel array.

The light source in column Bⱼ is controlled to transmit the second signal light at the second power, and in this case, no pixel is gated. Therefore, when pixels (for example, the pixel in column Bⱼ₊₁) after the first pixel region are gated, gating of pixel columns and light source columns is no longer staggered, that is, the gated pixel columns are aligned with the light source columns. With reference to FIG. 3, a light source in a fifth column of the light source array is controlled to transmit sixth signal light at sixth power, and correspondingly, gating of any pixel in the pixel array is stopped. Based on this, after all pixels in the first pixel region are gated, a light source in a sixth column of the light source array is controlled to transmit the second signal light at the second power; and correspondingly, a pixel in a sixth column of the pixel array is controlled to be gated. In phase E, the process of phase A may be repeated. With reference to FIG. 3, the control apparatus controls the light source in the sixth column to transmit the second signal light at the second power, and the control apparatus controls gating of the pixel in the sixth column of the pixel array, where the gated pixel in the sixth column may receive the second echo signal, and so on, until a last column of the light source array is scanned.

The foregoing step 1701 to step 1704 are performed to reduce power of a light source in a first light source region, so that energy of the first echo signal reflected back by the first object can be reduced. In addition, the first pixel region is a pixel corresponding to a spatial position of the first object, that is, the first pixel region does not include a pixel interfered with by the first echo signal. Therefore, accurate and complete association information of the detection region can be obtained. It should be noted that the method shown in FIG. 17 may alternatively be row-based scanning. The "row" in FIG. 17 may be replaced with the "column", and the "column" may be replaced with the "row". A specific process is similar to that in FIG. 17. Details are not described herein again. FIG. 17 is described by using an example in which the scanning manner is the same as that provided in FIG. 15. It should be understood that, after the first light source region and the first pixel region are determined, the association information of the detection region may alternatively be obtained in another possible manner. This is not limited in this application. It should be noted that the scanning manner relates to a hardware layer of the detection system, such as a drive design, a data reading circuit design, thermal evaluation, energy utilization, and impact on performance of the detection system. The performance of the detection system includes but is not limited to detection accuracy, a detection distance, and the like.

In a possible implementation, in the methods shown in FIG. 15 to FIG. 17, that the control apparatus controls some light sources in the light source array to transmit signal light at specific power may be specifically that the control apparatus sends a corresponding control signal to the light source array. That the control apparatus controls gating of some pixels in the pixel array may be specifically that the control apparatus sends a corresponding control signal to the pixel array. It should be understood that, that the control apparatus sends a control signal to the light source array and/or sends a control signal to the pixel array is an example. How to perform control is not specifically limited in this application.

It should be understood that in the methods shown in FIG. 15 to FIG. 17, staggering by one row or one column is used as an example for description. A quantity of rows and a quantity of columns by which gating is staggered are not limited in this application. For example, the staggering may be staggering by two rows or two columns, or even more than two rows or two columns.

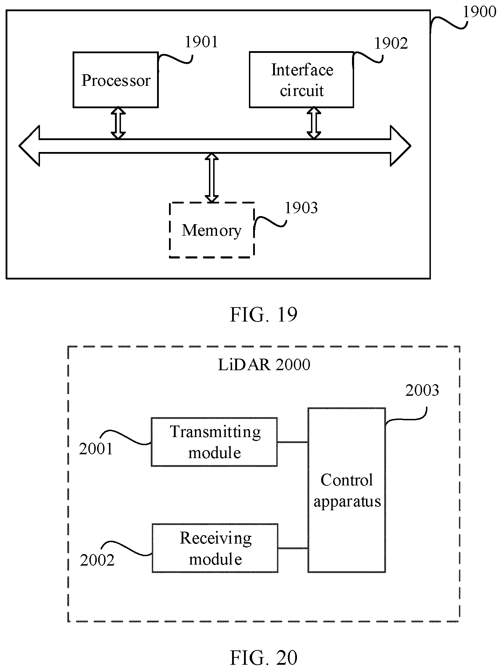

Based on the foregoing content and a same concept, FIG. 18 and FIG. 19 are schematic diagrams of possible structures of control apparatuses according to this application. The control apparatuses may be configured to implement functions of the control apparatus in the foregoing method embodiments, and therefore can also achieve the beneficial effects of the foregoing method embodiments.

As shown in FIG. 18, the control apparatus 1800 includes a processing module 1801 and a transceiver module 1802. The control apparatus 1800 is configured to implement functions of the control apparatus in the method embodiment shown in FIG. 11, FIG. 12, FIG. 13, FIG. 14, FIG. 15, FIG. 16, or FIG. 17.

When the control apparatus 1800 is configured to implement the functions of the control apparatus in the method embodiment shown in FIG. 11, the processing module 1801 is configured to: by using the transceiver module 1802, control a light source in a first light source region to transmit first signal light at first power, control a light source in a second light source region to transmit second signal light at second power, and control a pixel in a first pixel region to receive a first echo signal obtained after the first signal light is reflected by a first object, where a spatial position of the first object corresponds to the first pixel region, the first light source region corresponds to the first pixel region, the second light source region corresponds to a second pixel region, and the second power is higher than the first power.

For more detailed descriptions of the processing module 1801 and the transceiver module 1802, directly refer to the related descriptions in the method embodiment shown in FIG. 11. Details are not described herein again. For explanations of the light source regions and pixel regions, refer to the foregoing light source array and pixel array. Details are not described herein again.

It should be understood that the processing module 1801 in this embodiment of this application may be implemented by a processor or a circuit module related to a processor, and that the transceiver module 1802 may be implemented by an interface circuit or a circuit module related to an interface circuit.

Based on the foregoing content and the same concept, as shown in FIG. 19, this application further provides a control apparatus 1900. The control apparatus 1900 may include at least one processor 1901 and an interface circuit 1902. The processor 1901 and the interface circuit 1902 are coupled to each other. It may be understood that the interface circuit 1902 may be an input/output interface. Optionally, the control apparatus 1900 may further include a memory 1903, configured to store instructions executed by the processor 1901, store input data required for running instructions by the processor 1901, or store data generated after the processor 1901 runs instructions.

When the control apparatus 1900 is configured to implement the method shown in FIG. 11, the processor 1901 is configured to perform a function of the processing module 1801, and the interface circuit 1902 is configured to perform a function of the transceiver module 1802.

Based on the foregoing content and the same concept, FIG. 20 is a schematic diagram of a possible architecture of a LiDAR according to this application. The LiDAR 2000 may include a transmitting module 2001, a receiving module 2002, and a control apparatus 2003 configured to perform any one of the foregoing method embodiments. The transmitting module 2001 is configured to transmit first signal light at first power, and transmit second signal light at second power. The receiving module 2002 is configured to receive a first echo signal from a detection region, where the first echo signal includes reflected light obtained after the first signal light is reflected by a first object. For functions of the control apparatus 2003, refer to the foregoing related descriptions. Details are not described herein again. For a possible implementation of the transmitting module 2001, refer to the foregoing description of the transmitting module. For a possible implementation of the receiving module 2002, refer to the foregoing description of the receiving module. Details are not described herein again.

Based on the foregoing content and the same concept, this application provides a terminal device. The terminal device may include a control apparatus configured to perform any one of the foregoing method embodiments. Further, optionally, the terminal device may further include a memory, and the memory is configured to store a program or instructions. Certainly, the terminal device may further include another component, for example, a wireless control apparatus. For the control apparatus, refer to the description of the foregoing control apparatus. Details are not described herein again.

In a possible implementation, the terminal device may further include the foregoing transmitting module 2001 and receiving module 2002. In other words, the terminal device may include the foregoing LiDAR 2000.

For example, the terminal device may be, for example, a vehicle (for example, an unmanned vehicle, an intelligent vehicle, an electric vehicle, or a digital vehicle), a robot, a surveying and mapping device, an uncrewed aerial vehicle, a smart home device (for example, a television, a vacuum cleaning robot, a smart desk lamp, a speaker system, an intelligent lighting system, an electric appliance control system, home background music, a home theater system, an intercom system, or a video surveillance device), an intelligent manufacturing device (for example, an industrial device), an intelligent transportation device (for example, an AGV, an unmanned transport vehicle, or a truck), or an intelligent terminal (a mobile phone, a computer, a tablet computer, a palmtop computer, a desktop computer, a headset, a speaker, a wearable device, a vehicle-mounted device, a virtual reality device, an augmented reality device, or the like).

It may be understood that, to implement the functions in the foregoing embodiments, the control apparatus includes a corresponding hardware structure and/or software module for performing each function. A person skilled in the art should be easily aware that, with reference with modules and method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

The method steps in the embodiments of this application may be implemented by hardware, or may be implemented by the processor by executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium or write information into the storage medium. Certainly, the storage medium may alternatively be a constituent part of the processor. The processor and the storage medium may be located in an ASIC. In addition, the ASIC may be located in the control apparatus. Certainly, the processor and the storage medium may exist in the control apparatus as discrete modules.

All or some of the foregoing embodiments may be implemented by software, hardware, firmware, or any combination thereof. When software is used for implementation, all or some of embodiments may be implemented in a form of a computer program product. The computer program product includes one or more computer programs or instructions. When the computer programs or instructions are loaded and executed on a computer, the procedures or functions according to the embodiments of this application are all or partially performed. The computer may be a general-purpose computer, a dedicated computer, a computer network, or another programmable apparatus. The computer programs or instructions may be stored in a computer-readable storage medium or may be transmitted from one computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, or may be an optical medium, for example, a digital video disc (digital video disc, DVD), or may be a semiconductor medium, for example, a solid state drive (solid state drive, SSD).

In the embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "uniformity" does not mean absolute uniformity, and an engineering error may be allowed. "Vertical" does not mean absolute verticality, but allows an engineering error. "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" usually indicates an "or" relationship between associated objects. In a formula in this application, the character "/" indicates a "division" relationship between the associated objects. In addition, the word "example" in this application is used to represent an example, an illustration, or a description. Any embodiment or design scheme described as "an example" in this application should not be construed as being more preferable or having more advantages than another embodiment or design scheme. Alternatively, it may be understood that the word "example" is used to present a concept in a specific manner, and does not constitute a limitation on this application.

It may be understood that various numbers in this application are merely used for distinguishing for ease of description and are not intended to limit the scope of the embodiments of this application. The sequence numbers of the foregoing processes do not mean execution sequences, and the execution sequences of the processes should be determined based on functions and internal logic of the processes. The terms "first", "second", and the like are used to distinguish between similar objects instead of describing a specific order or sequence. In addition, the terms "include", "have", and any other variant thereof are intended to cover a non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

Although this application is described with reference to specific features and the embodiments thereof, it is clear that various modifications and combinations may be made to them without departing from the spirit and scope of this application. Correspondingly, the specification and accompanying drawings are merely examples for description of the solutions defined by the appended claims, and are considered as any or all of modifications, variations, combinations, or equivalents that cover the scope of this application.

It is clear that a person skilled in the art can make various modifications and variations to this application without departing from the spirit and the scope of the present invention. Therefore, this application is intended to cover these modifications and variations of the embodiments of this application provided that they fall within the protection scope defined by the following claims and their equivalent technologies.

## Claims

1. A detection control method, wherein the method comprises:
controlling a light source in a first light source region to transmit first signal light at first power, and controlling a light source in a second light source region to transmit second signal light at second power, wherein the second power is higher than the first power, the first light source region corresponds to a first pixel region, and the second light source region corresponds to a second pixel region; and
controlling a pixel in the first pixel region to receive a first echo signal obtained after the first signal light is reflected by a first object, wherein a spatial position of the first object corresponds to the first pixel region.

2. The method according to claim 1, wherein the method further comprises:
controlling a pixel in the second pixel region to receive a second echo signal obtained after the second signal light is reflected by a second object.

3. The method according to claim 1 or 2, wherein the method is applied to a detection system, the detection system comprises a light source array and a pixel array, the light source array comprises m×n light sources, the pixel array comprises m×n pixels, the light sources in the light source array correspond to the pixels in the pixel array, and both m and n are integers greater than 1.

4. The method according to claim 2 or 3, wherein the method further comprises:
controlling a light source in the light source array to transmit third signal light at third power, wherein the light source array comprises the first light source region and the second light source region; and
controlling a pixel in the pixel array to receive a third echo signal, wherein the third echo signal comprises reflected light obtained after the third signal light is reflected by the first object and/or the second object, and the pixel array comprises the first pixel region and the second pixel region, wherein
an intensity of the third echo signal corresponding to the pixel in the first pixel region is greater than or equal to a first preset value, and/or an intensity of the third echo signal corresponding to the pixel in the second pixel region is less than the first preset value.

5. The method according to claim 2 or 3, wherein the method further comprises:
controlling a light source in the light source array to transmit third signal light at third power, wherein the light source array comprises the first light source region and the second light source region; and
controlling a pixel in the pixel array to receive a third echo signal, wherein the third echo signal comprises reflected light obtained after the third signal light is reflected by the first object and/or the second object, and the pixel array comprises the first pixel region and the second pixel region, wherein
a difference between an intensity of the third echo signal corresponding to the pixel in the first pixel region and an intensity of the third echo signal corresponding to the pixel in the second pixel region is greater than or equal to a second preset value, and a first distance corresponding to the pixel in the first pixel region is the same as a first distance corresponding to the pixel in the second pixel region.

6. The method according to claim 2 or 3, wherein the method further comprises:
controlling a light source in the light source array to transmit third signal light at third power, wherein the light source array comprises the first light source region and the second light source region;
determining a third pixel region based on a received third echo signal, wherein the third echo signal comprises reflected light obtained after the third signal light is reflected by the first object and/or the second object, an intensity of the third echo signal corresponding to the third pixel region is greater than or equal to a fourth preset value, and the third pixel region comprises the first pixel region and a pixel interfered with by the third echo signal that is obtained through reflection by the first object;
controlling a light source in a third light source region to transmit fourth signal light at fourth power, and controlling a light source in a fourth light source region to transmit fifth signal light at fifth power, wherein the fifth power is higher than the fourth power, and the third light source region corresponds to the third pixel region;
controlling the pixel array to receive a fourth echo signal and a fifth echo signal, wherein the fourth echo signal comprises reflected light obtained after the fourth signal light is reflected by the first object, the fifth echo signal comprises reflected light obtained after the fifth signal light is reflected by the second object, and the pixel array comprises the first pixel region and the second pixel region; and
determining the first pixel region and the second pixel region based on the fourth echo signal and the fifth echo signal.

7. The method according to claim 6, wherein the third pixel region comprises row aᵢ to row aⱼ and column bi to column bⱼ of the pixel array, both aᵢ and bi are integers greater than 1, aⱼ is an integer greater than ai, and bⱼ is an integer greater than bi;
the controlling a light source in a fourth light source region to transmit fifth signal light at fifth power comprises:
controlling a light source in column bᵢ₋₁ of the light source array to transmit the fifth signal light at the fifth power; and
the controlling the pixel array to obtain a fourth echo signal and a fifth echo signal comprises:
controlling gating of pixels in column bᵢ₋₁ and column bi of the pixel array, wherein
a transmitting field of view of the light source in column bᵢ₋₁ corresponds to a receiving field of view of a pixel in column bᵢ₋₁.

8. The method according to claim 7, wherein the controlling the pixel array to obtain a fourth echo signal and a fifth echo signal further comprises:
controlling gating of pixels in row ai to row aⱼ in column bᵢ₊₁ to column bⱼ of the pixel array; and
the controlling a light source in a third light source region to transmit fourth signal light at fourth power comprises:
controlling light sources in row aᵢ to row aⱼ in column bi to column bⱼ₋₁ of the light source array to transmit the fourth signal light at the fourth power.

9. The method according to claim 8, wherein the controlling the pixel array to obtain a fourth echo signal and a fifth echo signal further comprises:
controlling gating of other pixels than the pixels in row ai to row aⱼ in column bᵢ₊₁ to column bⱼ of the pixel array; and
the controlling a light source in a fourth light source region to transmit fifth signal light at fifth power further comprises:
controlling other light sources than those in row aᵢ to row aⱼ in column bi to column bⱼ₋₁ of the light source array to transmit the fifth signal light at the fifth power.

10. The method according to claim 9, wherein the method further comprises:
stopping gating of a pixel in column bⱼ₊₁ of the pixel array; and
controlling a light source in column bⱼ of the light source array to transmit sixth signal light at sixth power.

11. The method according to claim 6, wherein the third pixel region comprises row ai to row aⱼ and column bi to column bⱼ of the pixel array, both ai and bi are integers greater than 1, aⱼ is an integer greater than ai, and bⱼ is an integer greater than bi;
the controlling a light source in a fourth light source region to transmit fifth signal light at fifth power comprises:
controlling a light source in row aᵢ₋₁ of the light source array to transmit the fifth signal light at the fifth power; and
the controlling the pixel array to obtain a fourth echo signal and a fifth echo signal comprises:
controlling gating of pixels in row aᵢ₋₁ and row ai of the pixel array, wherein
a transmitting field of view of the light source in row aᵢ₋₁ corresponds to a receiving field of view of a pixel in row aᵢ₋₁.

12. The method according to claim 11, wherein the controlling the pixel array to obtain a fourth echo signal and a fifth echo signal further comprises:
controlling gating of pixels in column bi to column bⱼ in row aᵢ₊₁ to row aⱼ of the pixel array, wherein
the controlling a light source in a third light source region to transmit fourth signal light at fourth power comprises:
controlling light sources in column bi to column bⱼ in row aᵢ to row aⱼ₋₁ of the light source array to transmit the fourth signal light at the fourth power.

13. The method according to claim 12, wherein the controlling the pixel array to obtain a fourth echo signal and a fifth echo signal further comprises:
controlling gating of other pixels than the pixels in column bi to column bⱼ in row aᵢ₊₁ to row aⱼ of the pixel array; and
the controlling a light source in a fourth light source region to transmit fifth signal light at fifth power further comprises:
controlling other light sources than those in column bi to column bⱼ in row aᵢ to row aⱼ₋₁ of the light source array to transmit the fifth signal light at the fifth power.

14. The method according to any one of claims 11 to 13, wherein the method further comprises:
stopping gating of a pixel in row aⱼ₊₁ of the pixel array; and
controlling a light source in row aⱼ of the light source array to transmit sixth signal light at sixth power.

15. A control apparatus, comprising at least one processor and an interface circuit, wherein the processor is configured to perform the method according to any one of claims 1 to 14.

16. A LiDAR, comprising a transmitting module, a receiving module, and a control apparatus configured to perform the method according to any one of claims 1 to 14, wherein
the transmitting module is configured to transmit the first signal light and the second signal light; and
the receiving module is configured to receive a first echo signal from a detection region, wherein the first echo signal comprises reflected light obtained after the first signal light is reflected by the first object.

17. A terminal device, comprising a control apparatus configured to perform the method according to any one of claims 1 to 14.

18. A computer-readable storage medium, wherein the computer-readable storage medium stores a computer program or instructions, and when the computer program or instructions are executed by a control apparatus, the control apparatus is enabled to perform the method according to any one of claims 1 to 14.
